(19) Europäisches Patentamt / European Patent Office / Office européen des brevets

(11) **EP 4 572 444 A1**

(12) **EUROPEAN PATENT APPLICATION**
published in accordance with Art. 153(4) EPC

(43) Date of publication:
**18.06.2025 Bulletin 2025/25**

(21) Application number: **23852866.5**

(22) Date of filing: **02.08.2023**

(51) International Patent Classification (IPC):
*H04W 64/00* (2009.01)      *H04W 24/08* (2009.01)
*H04W 56/00* (2009.01)      *G01S 5/02* (2010.01)
*H04L 5/00* (2006.01)      *H04W 24/10* (2009.01)

(52) Cooperative Patent Classification (CPC):
G01S 5/02; H04L 5/00; H04W 24/08; H04W 24/10;
H04W 56/00; H04W 64/00

(86) International application number:
**PCT/KR2023/011328**

(87) International publication number:
**WO 2024/034986 (15.02.2024 Gazette 2024/07)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **11.08.2022  KR 20220100918
30.09.2022  KR 20220125145**

(71) Applicant: **LG Electronics Inc.**
**Yeongdeungpo-gu**
**Seoul 07336 (KR)**

(72) Inventors:
• **SHIM, Jaenam**
 **Seoul 06772 (KR)**
• **HWANG, Seunggye**
 **Seoul 06772 (KR)**
• **KO, Hyunsoo**
 **Seoul 06772 (KR)**

(74) Representative: **Plasseraud IP**
**104 Rue de Richelieu**
**CS92104**
**75080 Paris Cedex 02 (FR)**

(54) **METHOD BY WHICH TERMINAL PERFORMS MEASUREMENT IN WIRELESS COMMUNICATION SYSTEM, AND DEVICE THEREFOR**

(57)      Disclosed are a method by which a terminal performs carrier phase measurement in a wireless communication system, according to various embodiments, and a device therefor. Disclosed is a method comprising the steps of: receiving, from a network, configuration information for repeated sequential configuration of time domain windows (TDWs) for carrier phase measurement within a measurement gap; measuring phase difference in positioning reference signals (PRSs) on the basis of the configuration information; and reporting measurement information regarding the phase difference to the network, wherein the measurement of the phase difference is performed using only the PRSs received within the same TDW. A device for performing the method is also disclosed.

FIG. 12

Configure TDWs for CPM within MG based on configuration information — S121

Measure phase difference of PRSs based on the configured TDWs — S123

Report measurement information including information about measured phase difference to network — S125

EP 4 572 444 A1

**Description**

**TECHNICAL FIELD**

The present disclosure relates to a method for a user equipment (UE) to perform measurement in a wireless communication system and an apparatus therefor.

**BACKGROUND ART**

Wireless communication systems have been widely deployed to provide various types of communication services such as voice or data. In general, a wireless communication system is a multiple access system that supports communication of multiple users by sharing available system resources (a bandwidth, transmission power, etc.). Examples of multiple access systems include a code division multiple access (CDMA) system, a frequency division multiple access (FDMA) system, a time division multiple access (TDMA) system, an orthogonal frequency division multiple access (OFDMA) system, a single carrier frequency division multiple access (SC-FDMA) system, and a multi carrier frequency division multiple access (MC-FDMA) system.

As more and more communication devices require larger communication capacities in transmitting and receiving signals, there is a need for mobile broadband communication improved from the legacy radio access technology. Accordingly, communication systems considering services/UEs sensitive to reliability and latency are under discussion. A next-generation radio access technology in consideration of enhanced mobile broadband communication, massive Machine Type Communication (MTC), and Ultra-Reliable and Low Latency Communication (URLLC) may be referred to as new radio access technology (RAT) or new radio (NR).

**DISCLOSURE**

**Technical Problem**

Objects to be achieved are to provide a method and apparatus for effectively eliminating a timing error in carrier phase measurement through the configuration of a time-domain window that ensures phase continuity.

It will be appreciated by those of ordinary skill in the art to which the embodiment(s) pertain that the objects that could be achieved with the embodiment(s) are not limited to what has been particularly described hereinabove and the above and other objects will be more clearly understood from the following detailed description.

**Technical Solution**

According to an aspect of the present disclosure, provided herein is a method of performing carrier phase measurement by a user equipment (UE) in a wireless communication system, including receiving configuration information for sequentially and repeatedly configuring a time domain window (TDW) for the carrier phase measurement within a measurement gap from a network; measuring a phase difference of positioning reference signals (PRSs) based on the configuration information; and reporting measurement information regarding the phase difference to the network. The phase difference may be measured using only the PRSs received within a same TDW.

Alternatively, a size of the TDW may be determined based on a specific number of slots or a specific number of symbols included in the configuration information.

Alternatively, a size of the TDW may be determined based on the number of PRS resource sets or the number of transmission reception points (TRPs) included in the configuration information.

Alternatively, a size of the TDW may be determined based on the number of transmission reception points (TRPs) or the number of PRS resource sets configured in a positioning frequency layer configured for the UE.

Alternatively, the configuration information may include information about a size of the TDW and a gap between TDWs.

Alternatively, a size of the TDW may be determined based on a maximum time period during which the UE maintains phase continuity.

Alternatively, the configuration information may include information about a reference transmission reception point (TRP) related to a PRS.

Alternatively, the TDW is repeatedly configured from a specific timing within the measurement gap, and the specific timing may be determined based on a timing at which the PRS is received from the reference TRP within the measurement gap.

Alternatively, the UE may fix a phase locked loop (PLL) during a time period of the TDW.

In another aspect of the present disclosure, provided herein is a user equipment (UE) for performing carrier phase measurement in a wireless communication system, including a radio frequency (RF) transceiver, and a processor connected to the RF receiver. The processor controls the RF transceiver to receive configuration information for sequentially and repeatedly configuring a time domain window (TDW) for the carrier phase measurement within a measurement gap from a network, measures a phase difference of positioning reference signals (PRSs) based on the configuration information, and reports measurement information regarding the phase difference to the network. The phase difference may be measured using only the PRSs received within a same TDW.

In another aspect of the present disclosure, provided herein is a method of receiving a report on a measurement result from a user equipment (UE) by a network in a wireless communication system, including transmitting configuration information for sequentially and repeatedly configuring a time domain window (TDW) for carrier phase measurement within a measurement gap to the UE; measuring a phase difference of positioning reference signals (PRSs) based on the configuration information; and receiving measurement information regarding the phase difference measured for the PRSs from the UE. The measurement information may include the phase difference measured using only the PRSs received within a same TDW.

### Advantageous Effects

According to various embodiments, a timing error in carrier phase measurement is effectively eliminated by configuring a time-domain window for carrier phase measurement in consideration of a time period that ensures phase continuity.

Alternatively, the time-domain window is configured to be positioned within a measurement gap, thereby minimizing operation limitations of a terminal.

Effects to be achieved by embodiment(s) are not limited to what has been particularly described hereinabove and other effects not mentioned herein will be more clearly understood by persons skilled in the art to which embodiment(s) pertain from the following detailed description.

### Brief Description of Drawings

The accompanying drawings, which are included to provide a further understanding of the disclosure and are incorporated in and constitute a part of this application, illustrate embodiments of the disclosure and together with the description serve to explain the principle of the disclosure.

FIG. 1 illustrates the structure of an LTE system.
FIG. 2 illustrates the structure of an NR system.
FIG. 3 illustrates the structure of an NR radio frame.
FIG. 4 illustrates the slot structure of an NR frame.
FIG. 5 is a diagram illustrating physical channels and a signal transmission method using the physical channels, which may be used in the embodiment;
FIG. 6 is a diagram illustrating a positioning protocol configuration for positioning a user equipment (UE), to which various embodiments are applicable.
FIG. 7 illustrates an exemplary system architecture for measuring positioning of a UE to which various embodiments are applicable.
FIG. 8 illustrates an implementation example of a network for UE positioning.
FIG. 9 is a diagram illustrating protocol layers for supporting LTE positioning protocol (LPP) message transmission, to which various embodiments are applicable.
FIG. 10 is a diagram illustrating protocol layers for supporting NR positioning protocol a (NRPPa) protocol data unit (PDU) transmission, to which various embodiments are applicable.
FIG. 11 is a diagram illustrating an observed time difference of arrival (OTDOA) positioning method, to which various embodiments are applicable.
FIG. 12 is a diagram illustrating a method for a UE to perform carrier phase measurement.
FIG. 13 is a diagram illustrating a method for a network to receive a report on measurement information related to carrier phase measurement from a UE.
FIG. 14 illustrates a communication system applied to the present disclosure;
FIG. 15 illustrates wireless devices applicable to the present disclosure.
FIG. 16 illustrates another example of a wireless device to which the present disclosure is applied.

### BEST MODE

Various embodiments are applicable to a variety of wireless access technologies such as code division multiple access (CDMA), frequency division multiple access (FDMA), time division multiple access (TDMA), orthogonal frequency division multiple access (OFDMA), and single carrier frequency division multiple access (SC-FDMA).

A sidelink refers to a communication scheme in which a direct link is established between user equipments (UEs) to directly exchange voice or data between UEs without assistance from a base station (BS). The sidelink is being considered as one way to address the burden on the BS caused by rapidly increasing data traffic.

Vehicle-to-everything (V2X) refers to a communication technology for exchanging information with other vehicles, pedestrians, and infrastructure-built objects through wired/wireless communication. V2X may be divided into four types: vehicle-to-vehicle (V2V), vehicle-to-infrastructure (V2I), vehicle-to-network (V2N), and vehicle-to-pedestrian (V2P). V2X communication may be provided through a PC5 interface and/or a Uu interface.

As more and more communication devices require larger communication capacities in transmitting and receiving signals, there is a need for mobile broadband communication improved from the legacy radio access technology. Accordingly, communication systems considering services/UEs sensitive to reliability and latency are under discussion. A next-generation radio access technology in consideration of enhanced mobile broadband communication, massive MTC, and Ultra-Reliable and Low Latency Communication (URLLC) may be referred to as new radio access technology (RAT) or new radio (NR). Even in NR, V2X communication may be supported.

Techniques described herein may be used in various wireless access systems such as code division multiple access (CDMA), frequency division multiple access (FDMA), time division multiple access (TDMA), orthogonal frequency division multiple access (OFDMA), single carrier-frequency division multiple access (SC-FDMA), etc. CDMA may be implemented as a radio technology such as universal terrestrial radio access (UTRA) or CDMA2000. TDMA may be implemented as a radio technology such as global system for mobile communications (GSM)/general packet radio service (GPRS)/Enhanced Data Rates for GSM Evolution (EDGE). OFDMA may be implemented as a radio technology such as IEEE 802.11 (Wi-Fi), IEEE 802.16 (WiMAX), IEEE 802.20, evolved-UTRA (E-UTRA) etc. UTRA is a part of universal mobile telecommunications system (UMTS). 3GPP LTE is a part of Evolved UMTS (E-UMTS) using E-UTRA. 3GPP LTE employs OFDMA for downlink and SC-FDMA for uplink. LTE-A is an evolution of 3GPP LTE. 3GPP NR (New Radio or New Radio Access Technology) is an evolved version of 3GPP LTE/LTE-A/LTE-A pro.

5G NR is a successor technology of LTE-A, and is a new clean-slate mobile communication system with characteristics such as high performance, low latency, and high availability. 5G NR may utilize all available spectrum resources, from low frequency bands below 1 GHz to intermediate frequency bands from 1 GHz to 10 GHz and high frequency (millimeter wave) bands above 24 GHz.

For clarity of explanation, LTE-A or 5G NR is mainly described, but the technical spirit of the embodiment(s) is not limited thereto.

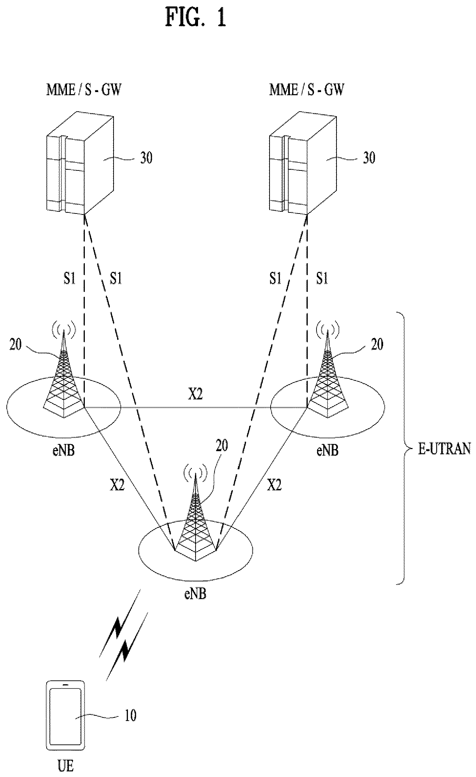

FIG. 1 illustrates the structure of an LTE system to which the present disclosure is applicable. This may also be called an evolved UMTS terrestrial radio access network (E-UTRAN) or LTE/LTE-A system.

Referring to FIG. 1, the E-UTRAN includes evolved Node Bs (eNBs) 20 which provide a control plane and a user plane to UEs 10. A UE 10 may be fixed or mobile, and may also be referred to as a mobile station (MS), user terminal (UT), subscriber station (SS), mobile terminal (MT), or wireless device. An eNB 20 is a fixed station communication with the UE 10 and may also be referred to as a base station (BS), a base transceiver system (BTS), or an access point.

eNBs 20 may be connected to each other via an X2 interface. An eNB 20 is connected to an evolved packet core (EPC) 39 via an S1 interface. More specifically, the eNB 20 is connected to a mobility management entity (MME) via an S1-MME interface and to a serving gateway (S-GW) via an S1-U interface.

The EPC 30 includes an MME, an S-GW, and a packet data network-gateway (P-GW). The MME has access information or capability information about UEs, which are mainly used for mobility management of the UEs. The S-GW is a gateway having the E-UTRAN as an end point, and the P-GW is a gateway having a packet data network (PDN) as an end point.

Based on the lowest three layers of the open system interconnection (OSI) reference model known in communication systems, the radio protocol stack between a UE and a network may be divided into Layer 1 (L1), Layer 2 (L2) and Layer 3 (L3). These layers are defined in pairs between a UE and an Evolved UTRAN (E-UTRAN), for data transmission via the Uu interface. The physical (PHY) layer at L1 provides an information transfer service on physical channels. The radio resource control (RRC) layer at L3 functions to control radio resources between the UE and the network. For this purpose, the RRC layer exchanges RRC messages between the UE and an eNB.

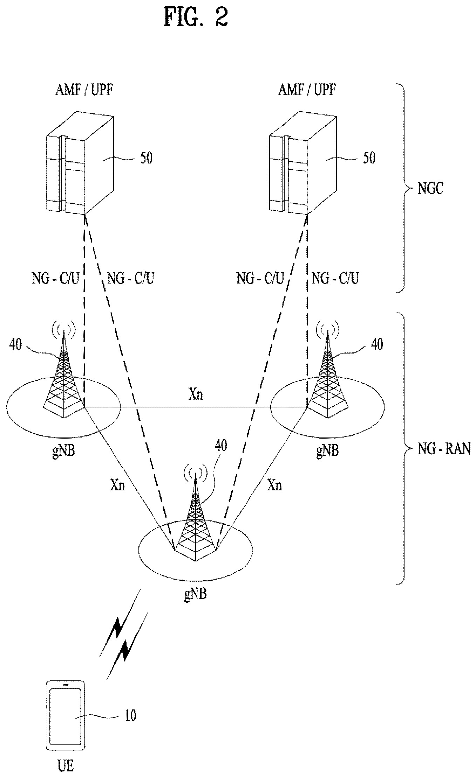

FIG. 2 illustrates the structure of a NR system.

Referring to FIG. 2, a next generation radio access network (NG-RAN) may include a next generation Node B (gNB) and/or an eNB, which provides user-plane and control-plane protocol termination to a UE. In FIG. 2, the NG-RAN is shown as including only gNBs, by way of example. A gNB and an eNB are connected to each other via an Xn interface. The gNB and the eNB are connected to a 5G core network (5GC) via an NG interface. More specifically, the gNB and the eNB are connected to an access and mobility management function (AMF) via an NG-C interface and to a user plane function (UPF) via an NG-U interface.

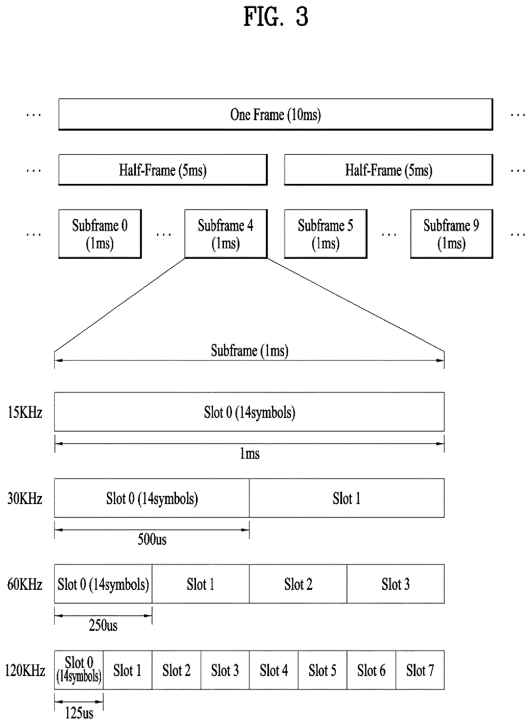

FIG. 3 illustrates the structure of a NR radio frame to which the present disclosure is applicable.

Referring to FIG. 3, a radio frame may be used for UL transmission and DL transmission in NR. A radio frame is 10 ms in length, and may be defined by two 5-ms half-frames. An HF may include five 1-ms subframes. A subframe may be divided into one or more slots, and the number of slots in an SF may be determined according to a subcarrier spacing (SCS). Each slot may include 12 or 14 OFDM(A) symbols according to a cyclic prefix (CP).

In a normal CP (NCP) case, each slot may include 14 symbols, whereas in an extended CP (ECP) case, each slot may include 12 symbols. Herein, a symbol may be an OFDM symbol (or CP-OFDM symbol) or an SC-FDMA symbol (or DFT-s-OFDM symbol).

Table 1 below lists the number of symbols per slot $N^{slot}_{symb}$, the number of slots per frame $N^{frame,u}_{slot}$, and the number of slots per subframe $N^{subframe,u}_{slot}$ according to an SCS configuration $\mu$ in the NCP case.

[Table 1]

| SCS ($15*2^u$) | $N^{slot}_{symb}$ | $N^{frame,u}_{slot}$ | $N^{subframe,u}_{slot}$ |
|---|---|---|---|
| 15KHz (u=0) | 14 | 10 | 1 |
| 30KHz (u=1) | 14 | 20 | 2 |
| 60KHz (u=2) | 14 | 40 | 4 |
| 120KHz (u=3) | 14 | 80 | 8 |
| 240KHz (u=4) | 14 | 160 | 16 |

Table 2 below lists the number of symbols per slot, the number of slots per frame, and the number of slots per subframe according to an SCS in the ECP case.

[Table 2]

| SCS ($15*2^u$) | $N^{slot}_{symb}$ | $N^{frame,u}_{slot}$ | $N^{subframe,u}_{slot}$ |
|---|---|---|---|
| 60KHz (u=2) | 12 | 40 | 4 |

In the NR system, different OFDM(A) numerologies (e.g., SCSs, CP lengths, etc.) may be configured for a plurality of cells aggregated for one UE. Thus, the (absolute) duration of a time resource (e.g., SF, slot, or TTI) including the same number of symbols may differ between the aggregated cells (such a time resource is commonly referred to as a time unit (TU) for convenience of description). In NR, multiple numerologies or SCSs to support various 5G services may be supported. For example, a wide area in conventional cellular bands may be supported when the SCS is 15 kHz, and a dense urban environment, lower latency, and a wider carrier bandwidth may be supported when the SCS is 30 kHz/60 kHz. When the SCS is 60 kHz or higher, a bandwidth wider than 24.25 GHz may be supported to overcome phase noise.

The NR frequency band may be defined as two types of frequency ranges. The two types of frequency ranges may be FR1 and FR2. The numerical values of the frequency ranges may be changed. For example, the two types of frequency ranges may be configured as shown in Table 3 below. Among the frequency ranges used in the NR system, FR1 may represent "sub 6 GHz range" and FR2 may represent "above 6 GHz range" and may be called millimeter wave (mmW).

[Table 3]

| Frequency Range designation | Corresponding frequency range | Subcarrier Spacing (SCS) |
|---|---|---|
| FR1 | 450MHz - 6000MHz | 15, 30, 60kHz |
| FR2 | 24250MHz - 52600MHz | 60, 120, 240kHz |

As mentioned above, the numerical values of the frequency ranges of the NR system may be changed. For example, FR1 may include a band of 410 MHz to 7125 MHz as shown in Table 4 below. That is, FR1 may include a frequency band of 6 GHz (or 5850 MHz, 5900 MHz, 5925 MHz, etc.) or higher. For example, the frequency band of 6 GHz (or 5850 MHz, 5900 MHz, 5925 MHz, etc.) or higher included in FR1 may include an unlicensed band. The unlicensed band may be used for various purposes, for example, for communication for vehicles (e.g., autonomous driving).

[Table 4]

| Frequency Range designation | Corresponding frequency range | Subcarrier Spacing (SCS) |
| --- | --- | --- |
| FR1 | 410MHz - 7125MHz | 15, 30, 60kHz |
| FR2 | 24250MHz - 52600MHz | 60, 120, 240kHz |

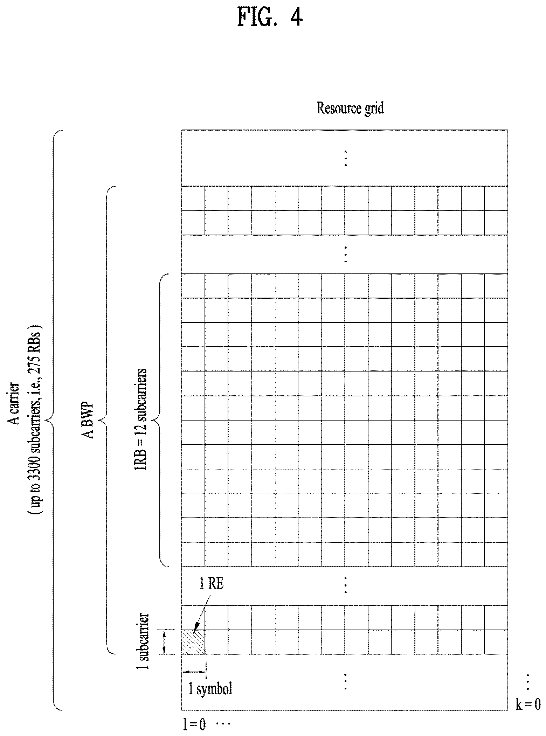

FIG. 4 illustrates the slot structure of a NR frame.

Referring to FIG. 4, one slot includes a plurality of symbols in the time domain. For example, one slot may include 14 symbols in a normal CP and 12 symbols in an extended CP. Alternatively, one slot may include 7 symbols in the normal CP and 6 symbols in the extended CP.

A carrier may include a plurality of subcarriers in the frequency domain. A resource block (RB) is defined as a plurality of consecutive subcarriers (e.g., 12 subcarriers) in the frequency domain. A bandwidth part (BWP) may be defined as a plurality of consecutive (P)RBs in the frequency domain, and the BWP may correspond to one numerology (e.g., SCS, CP length, etc.). The carrier may include up to N (e.g., 5) BWPs. Data communication may be conducted in an activated BWP. In a resource grid, each element may be referred to as a resource element (RE) and may be mapped to one complex symbol.

The wireless interface between UEs or the wireless interface between a UE and a network may be composed of an L1 layer, an L2 layer, and an L3 layer. In various embodiments of the present disclosure, the L1 layer may represent a physical layer. The L2 layer may represent, for example, at least one of a MAC layer, an RLC layer, a PDCP layer, and an SDAP layer. The L3 layer may represent, for example, an RRC layer.

## Bandwidth part (BWP)

In the NR system, up to 400 MHz may be supported per component carrier (CC). If a UE operating on a wideband CC always operates with the RF for the entire CCs turned on, the battery consumption of the UE may be increased. Alternatively, considering various use cases (e.g., eMBB, URLLC, Mmtc, V2X, etc.) operating within one wideband CC, different numerologies (e.g., sub-carrier spacings) may be supported for different frequency bands within a specific CC. Alternatively, the capability for the maximum bandwidth may differ among the UEs. In consideration of this, the BS may instruct the UE to operate only in a partial bandwidth, not the entire bandwidth of the wideband CC. The partial bandwidth is defined as a bandwidth part (BWP) for simplicity. Here, the BWP may be composed of resource blocks (RBs) contiguous on the frequency axis, and may correspond to one numerology (e.g., sub-carrier spacing, CP length, slot/mini-slot duration).

The BS may configure multiple BWPs in one CC configured for the UE. For example, a BWP occupying a relatively small frequency region may be configured in a PDCCH monitoring slot, and a PDSCH indicated by the PDCCH in a larger BWP may be scheduled. Alternatively, when UEs are concentrated in a specific BWP, some of the UEs may be configured in another BWP for load balancing. Alternatively, a spectrum in the middle of the entire bandwidth may be punctured and two BWPs on both sides may be configured in the same slot in consideration of frequency-domain inter-cell interference cancellation between neighbor cells. That is, the BS may configure at least one DL/UL BWP for the UE associated with the wideband CC and activate at least one DL/UL BWP among the configured DL/UL BWP(s) at a specific time (through L1 signaling, MAC CE or RRC signalling, etc.). The BS may instruct the UE to switch to another configured DL/UL BWP (through L1 signaling, MAC CE or RRC signalling, etc.). Alternatively, when a timer expires, the UE may switch to a predetermined DL/UL BWP. The activated DL/UL BWP is defined as an active DL/UL BWP. The UE may fail to receive DL/UL BWP configuration during an initial access procedure or before an RRC connection is set up. A DL/UL BWP assumed by the UE in this situation is defined as an initial active DL/UL BWP.

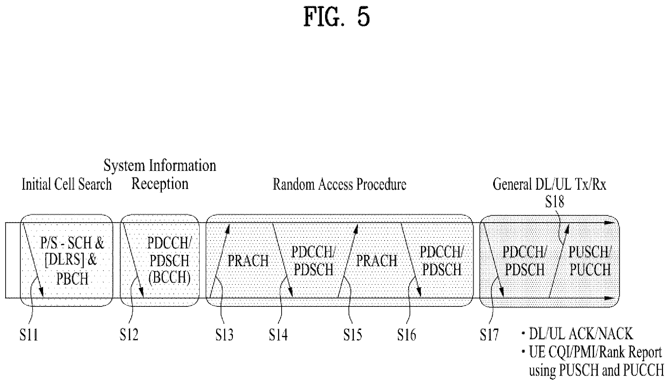

FIG. 5 is a diagram illustrating physical channels and a signal transmission method using the physical channels, which may be used in various embodiments.

Referring to FIG. 5, when powered on or when a UE initially enters a cell, the UE performs initial cell search involving synchronization with a BS in step S11. For initial cell search, the UE receives a synchronization signal block (SSB). The SSB includes a primary synchronization signal (PSS), a secondary synchronization signal (SSS), and a physical broadcast channel (PBCH). The UE synchronizes with the BS and acquires information such as a cell Identifier (ID) based on the PSS/SSS. Then the UE may receive broadcast information from the cell on the PBCH. In the meantime, the UE may check a downlink channel status by receiving a downlink reference signal (DL RS) during initial cell search.

After initial cell search, the UE may acquire more specific system information by receiving a physical downlink control channel (PDCCH) and receiving a physical downlink shared channel (PDSCH) based on information of the PDCCH in step S12.

Subsequently, to complete connection to the eNB, the UE may perform a random access procedure with the eNB (S13 to S16). In the random access procedure, the UE may transmit a preamble on a physical random access channel (PRACH) (S13) and may receive a PDCCH and a random access response (RAR) for the preamble on a PDSCH associated with the PDCCH (S14). The UE may transmit a physical uplink shared channel (PUSCH) by using scheduling information in the RAR (S15), and perform a contention resolution procedure including reception of a PDCCH signal and a PDSCH signal corresponding to the PDCCH signal (S16).

Aside from the above 4-step random access procedure (4-step RACH procedure or type-1 random access procedure), when the random access procedure is performed in two steps (2-step RACH procedure or type-2 random access procedure), steps S13 and S15 may be performed as one UE transmission operation (e.g., an operation of transmitting message A (MsgA) including a PRACH preamble and/or a PUSCH), and steps S14 and S16 may be performed as one BS transmission operation (e.g., an operation of transmitting message B (MsgB) including an RAR and/or contention resolution information)

After the above procedure, the UE may receive a PDCCH and/or a PDSCH from the BS (S17) and transmit a PUSCH and/or a physical uplink control channel (PUCCH) to the BS (S18), in a general UL/DL signal transmission procedure.

Control information that the UE transmits to the BS is generically called uplink control information (UCI). The UCI includes a hybrid automatic repeat and request acknowledgement/negative acknowledgement (HARQ-ACK/NACK), a scheduling request (SR), a channel quality indicator (CQI), a precoding matrix index (PMI), a rank indicator (RI), etc.

In general, UCI is transmitted periodically on a PUCCH. However, if control information and traffic data should be transmitted simultaneously, the control information and traffic data may be transmitted on a PUSCH. In addition, the UCI may be transmitted aperiodically on the PUSCH, upon receipt of a request/command from a network.

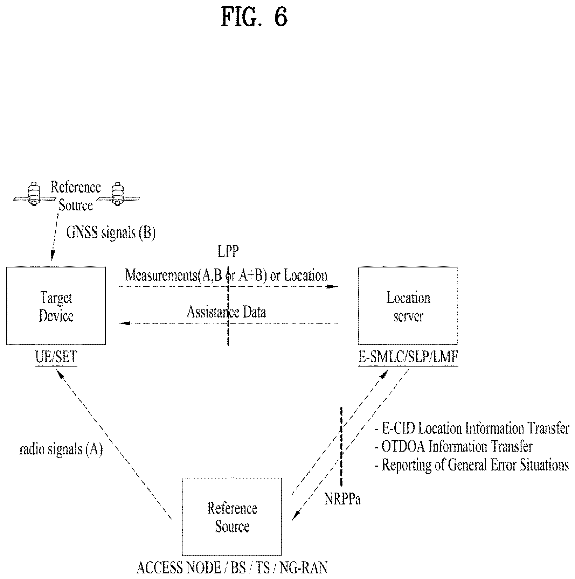

FIG. 6 is a diagram illustrating an exemplary positioning protocol configuration for positioning a UE, to which the embodiment is applicable.

Referring to FIG. 6, an LTE positioning protocol (LPP) may be used as a point-to-point protocol between a location server (E-SMLC and/or SLP and/or LMF) and a target device (UE and/or SET), for positioning the target device using position-related measurements obtained from one or more reference resources. The target device and the location server may exchange measurements and/or location information based on signal A and/or signal B over the LPP.

NRPPa may be used for information exchange between a reference source (access node and/or BS and/or TP and/or NG-RAN node) and the location server.

The NRPPa protocol may provide the following functions.

- E-CID Location Information Transfer. This function allows the reference source to exchange location information with the LMF for the purpose of E-CID positioning.
- OTDOA Information Transfer. This function allows the reference source to exchange information with the LMF for the purpose of OTDOA positioning.
- Reporting of General Error Situations. This function allows reporting of general error situations, for which function-specific error messages have not been defined.

<u>PRS (positioning reference signal)</u>

For such positioning, a positioning reference signal (PRS) may be used. The PRS is a reference signal used to estimate the position of the UE.

A positioning frequency layer may include one or more PRS resource sets, each including one or more PRS resources.

<u>Sequence generation</u>

A PRS sequence $r(m)$ ($m$ = 0, 1, ...) may be defined by Equation 1.

[Equation 1]

$$r(m) = \frac{1}{\sqrt{2}}\big(1 - 2c(m)\big) + j\frac{1}{\sqrt{2}}\big(1 - 2c(m+1)\big)$$

In Equation 1, c(i) may be a pseudo-random sequence. A pseudo-random sequence generator may be initialized by Equation 2.

[Equation 2]

$$c_{\text{init}} = \left( 2^{22} \left\lfloor \frac{n_{\text{ID,seq}}^{\text{PRS}}}{1024} \right\rfloor + 2^{10} \left( N_{\text{symb}}^{\text{slot}} n_{\text{s,f}}^{\mu} + l + 1 \right) \left( 2 \left( n_{\text{ID,seq}}^{\text{PRS}} \bmod 1024 \right) + 1 \right) \right.$$

$$\left. + \left( n_{\text{ID,seq}}^{\text{PRS}} \bmod 1024 \right) \right) \bmod 2^{31}$$

$n_{\text{s,f}}^{\mu}$ may be a slot number in a frame in an SCS configuration μ. A DL PRS sequence ID $n_{\text{ID,seq}}^{\text{PRS}} \in \{0, 1, \dots, 4095\}$ may be given by a higher-layer parameter (e.g., *DL-PRS-SequenceId*). 1 may be an OFDM symbol in a slot to which the sequence is mapped.

Mapping to physical resources in a DL PRS resource

A PRS sequence *r(m)* may be scaled by $\beta_{\text{PRS}}$ and mapped to REs $(k, l)_{p,\mu}$, specifically by Equation 3. $(k, l)_{p,\mu}$ may represent an RE (k, l) for an antenna port p and the SCS configuration μ.

[Equation 3]

$$a_{k,l}^{(p,\mu)} = \beta_{\text{PRS}} \, r(m)$$

$$m = 0, 1, \dots$$

$$k = m K_{\text{comb}}^{\text{PRS}} + \left( \left( k_{\text{offset}}^{\text{PRS}} + k' \right) \bmod K_{\text{comb}}^{\text{PRS}} \right)$$

$$l = l_{\text{start}}^{\text{PRS}}, l_{\text{start}}^{\text{PRS}} + 1, \dots, l_{\text{start}}^{\text{PRS}} + L_{\text{PRS}} - 1$$

Herein, the following conditions may have to be satisfied:

- The REs $(k, l)_{p,\mu}$ are included in an RB occupied by a DL PRS resource configured for the UE;
- The symbol l not used by any SS/PBCH block used by a serving cell for a DL PRS transmitted from the serving cell or indicated by a higher-layer parameter *SSB-positionInBurst* for a DL PRS transmitted from a non-serving cell;
- A slot number satisfies the following PRS resource set-related condition;

$l_{\text{start}}^{\text{PRS}}$ is the first symbol of the DL PRS in the slot, which may be given by a higher-layer parameter *DL-PRS-ResourceSymbolOffset.* The time-domain size of the DL PRS resource, $L_{\text{PRS}} \in \{2,4,6,12\}$ may be given by a higher-layer parameter *DL-PRS-NumSymbols.* A comb size $K_{\text{comb}}^{\text{PRS}} \in \{2, 4, 6, 12\}$ may be given by a higher-layer parameter *transmissionComb.* A combination $\{L_{\text{PRS}}, K_{\text{comb}}^{\text{PRS}}\}$ of $L_{\text{PRS}}$ and $K_{\text{comb}}^{\text{PRS}}$ may be one of {2, 2}, {4, 2}, {6, 2}, {12, 2}, {4, 4}, {12, 4}, {6, 6}, {12, 6} and/or {12, 12}. An RE offset $k_{\text{offset}}^{\text{PRS}} \in \{0, 1, \dots, K_{\text{comb}}^{\text{PRS}} - 1\}$ may be given by *combOffset.* A frequency offset *k'* may be a function of $l - l_{\text{start}}^{\text{PRS}}$ as shown in Table 5.

[Table 5]

| $K_{\text{comb}}^{\text{PRS}}$ | Symbol number within the downlink PRS resource $l - l_{\text{start}}^{\text{PRS}}$ | | | | | | | | | | | |
|---|---|---|---|---|---|---|---|---|---|---|---|---|
| | 0 | 1 | 2 | 3 | 4 | 5 | 6 | 7 | 8 | 9 | 10 | 11 |
| 2 | 0 | 1 | 0 | 1 | 0 | 1 | 0 | 1 | 0 | 1 | 0 | 1 |
| 4 | 0 | 2 | 1 | 3 | 0 | 2 | 1 | 3 | 0 | 2 | 1 | 3 |
| 6 | 0 | 3 | 1 | 4 | 2 | 5 | 0 | 3 | 1 | 4 | 2 | 5 |
| 12 | 0 | 6 | 3 | 9 | 1 | 7 | 4 | 10 | 2 | 8 | 5 | 11 |

A reference point for k=0 may be the position of point A in a positioning frequency layer in which the DL PRS resource is configured. Point A may be given by a higher-layer parameter *dl-PRS-PointA-r16.*

Mapping to slots in a DL PRS resource set

A DL PRS resource included in a DL PRS resource set may be transmitted in a slot and a frame which satisfy the following Equation 4.

[Equation 4]

$$\left(N_{\text{slot}}^{\text{frame},\mu} n_{\text{f}} + n_{\text{s,f}}^{\mu} - T_{\text{offset}}^{\text{PRS}} - T_{\text{offset,res}}^{\text{PRS}}\right) \bmod 2^{\mu} T_{\text{per}}^{\text{PRS}} \in \left\{i T_{\text{gap}}^{\text{PRS}}\right\}_{i=0}^{T_{\text{rep}}^{\text{PRS}}-1}$$

$N_{\text{slot}}^{\text{frame},\mu}$ may be the number of slots per frame in the SCS configuration μ. $n_{\text{f}}$ may be a system frame number (SFN). $n_{\text{s,f}}^{\mu}$ may be a slot number in a frame in the SCS configuration μ. A slot offset $T_{\text{offset}}^{\text{PRS}} \in \left\{0, 1, \dots, T_{\text{per}}^{\text{PRS}} - 1\right\}$ may be given by a higher-layer parameter *DL-PRS-ResourceSetSlotOffset.* A DL PRS resource slot offset $T_{\text{offset,res}}^{\text{PRS}}$ may be given by a higher layer parameter *DL-PRS-ResourceSlotOffset.* A periodicity $T_{\text{per}}^{\text{PRS}} \in \{4, 5, 8, 10, 16, 20, 32, 40, 64, 80, 160, 320, 640, 1280, 2560, 5120, 10240\}$ may be given by a higher-layer parameter *DL-PRS-Periodicity.* A repetition factor $T_{\text{rep}}^{\text{PRS}} \in \{1, 2, 4, 6, 8, 16, 32\}$ may be given by a higher-layer parameter *DL-PRS-ResourceRepetitionFactor.* A muting repetition factor PRS $T_{\text{muting}}^{\text{PRS}}$ may be given by a higher-layer parameter *DL-PRS-MutingBitRepetitionFactor.* A time gap $T_{\text{gap}}^{\text{PRS}} \in \{1, 2, 4, 8, 16, 32\}$ may be given by a higher-layer parameter *DL-PRS-ResourceTimeGap.*

The PRS reception procedure of a terminal in an NR system to which various embodiments of the present disclosure are applicable may be based on Table 6 below.

[Table 6]

5.1.6.5 PRS reception procedure

The UE can be configured with one or more DL PRS resource set configuration(s) as indicated by the higher layer parameters DL-PRS-ResourceSet and DL-PRS-Resource.

Each DL PRS resource set consists of K≥1 DL PRS resource(s) where each has an associated spatial transmission filter. The UE can be configured with one or more DL PRS Positioning Frequency Layer configuration(s) as indicated by the higher layer parameter DL-PRS-PositioningFrequencyLayer. A DL PRS Positioning Frequency Layer is defined as a collection of DL PRS Resource Sets which have common parameters configured by DL-PRS-PositioningFrequencyLayer.

The UE assumes that the following parameters for each DL PRS resource(s) are configured via higher layer parameters DL-PRS-PositioningFrequencyLayer, DL-PRS-ResourceSet and DL-PRS-Resource.

A positioning frequency layer consists of one or more PRS resource sets and it is defined by:

(continued)

- DL-PRS-SubcarrierSpacing defines the subcarrier spacing for the DL PRS resource. All DL PRS Resources and DL PRS Resource sets in the same DL-PRS-PositioningFrequencyLayer have the same value of DL-PRS-SubcarrierSpacing. The supported values of DL-PRS-SubcarrierSpacing are given in Table 4.2-1 of [4, TS38.211].

- DL-PRS-CyclicPrefix defines the cyclic prefix for the DL PRS resource.

All DL PRS Resources and DL PRS Resource sets in the same DL-PRS-PositioningFrequencyLayer have the same value of DL-PRS-CyclicPrefix. The supported values of DL-PRS-CyclicPrefix are given in Table 4.2-1 of [4, TS38.211].

- DL-PRS-PointA defines the absolute frequency of the reference resource block. Its lowest subcarrier is also known as Point A. All DL PRS resources belonging to the same DL PRS Resource Set have common Point A and all DL PRS Resources sets belonging to the same DL-PRS-PositioningFrequencyLayer have a common Point A.

The UE expects that it will be configured with [IDs] each of which is defined such that it is associated with multiple DL PRS Resource Sets from the same cell. The UE expects that one of these [IDs] along with a DL-PRS-ResourceSetId and a DL-PRS-ResourceId can be used to uniquely identify a DL PRS Resource.

---

A PRS resource set consists of one or more PRS resources and it is defined by:

- DL-PRS-ResourceSetId defines the identity of the DL PRS resource set configuration.

- DL-PRS-Periodicity defines the DL PRS resource periodicity and takes values

$$T_{\text{per}}^{\text{PRS}} \in 2^{\mu}\{4, 8, 16, 32, 64, 5, 10, 20, 40, 80, 160, 320, 640, 1280, 2560, 5120, 10240, 20480\}$$

slots, where $\mu = 0, 1, 2, 3$ for DL-PRS-SubcarrierSpacing=15, 30, 60 and 120kHz respectively.

$$T_{\text{per}}^{\text{PRS}} = 2^{\mu} \cdot 20480$$ is not supported for $\mu = 0$. All the DL PRS resources within one resource set are configured with the same periodicity.

- DL-PRS-ResourceRepetitionFactor defines how many times each DL-PRS resource is repeated for a single instance of the DL-PRS resource set and takes values

$$T_{\text{rep}}^{\text{PRS}} \in \{1, 2, 4, 6, 8, 16, 32\}$$ ,. All the DL PRS resources within one resource set have the same ResourceRepetitionFactor

- DL-PRS-ResourceTimeGap defines the offset in number of slots between two repeated instances of a DL PRS resource with the same DL-PRS-ResourceID within a single instance of the DL PRS resource set and takes values

$$T_{\text{gap}}^{\text{PRS}} \in \{1, 2, 4, 8, 16, 32\}$$ . The UE only expects to be configured with DL-PRS-ResourceTimeGap if DL-PRS-ResourceRepetitionFactor is configured with value greater than 1. The time duration spanned by one instance of a DL-PRS-ResourceSet is not expected to exceed the configured value of DL-PRS-Periodicity. All the DL PRS resources within one resource set have the same DL-PRS-ResourceTimeGap.

- DL-PRS-MutingPattern defines a bitmap of the time locations where the DL PRS resource is expected to not be transmitted for a DL PRS resource set. The bitmap size can be {2, 4, 8, 16, 32} bits long. The bitmap has two options for applicability. In the first option each bit in the bitmap corresponds to a configurable number of consecutive instances of a DL-PRS-ResourceSet where all the DL-PRS-Resources within the set are muted for the instance that is indicated to be muted. In the second option each bit in the bitmap corresponds to a single repetition index for each of the DL-PRS-Resources within each instance of a DL-PRS-ResourceSet and the length of the bitmap is equal to DL-PRS-ResourceRepetitionFactor. Both options may be configured at the same time in which case the logical AND operation is applied to the bit maps as described in clause 7.4.1.7.4 of [4, TS 38.211].

---

in a higher layer parameter DL-PRS-RstdReferenceInfo. The reference time indicated by the network to the UE can also be used by the UE to determine how to apply higher layer parameters DL-PRS-expectedRSTD and DL-PRS-expectedRSTD-uncertainty.

The UE expects the reference time to be indicated whenever it is expected to receive the DL PRS. This reference time provided by DL-PRS-RstdReferenceInfo may include an [ID], a PRS resource set ID, and optionally a single PRS resource ID or a list of PRS resource IDs.

The UE may use different DL PRS resources or a different DL PRS resource set to determine the reference time for the RSTD measurement as long as the condition that the DL PRS resources used belong to a single DL PRS resource set is met. If the UE chooses to use a

different reference time than indicated by the network, then it is expected to report the DL PRS resource ID(s) or the DL PRS resource set ID used to determine the reference.

The UE may be configured to report quality metrics corresponding to the RSTD and UE Rx-Tx time difference measurements which include the following fields:

- TimingMeasQuality-Value which provides the best estimate of the uncertainty of the measurement

- TimingMeasQuality-Resolution which specifies the resolution levels used in the Value field

The UE expects to be configured with higher layer parameter DL-PRS-expectedRSTD, which defines the time difference with respect to the received DL subframe timing the UE is expected to receive DL PRS, and DL-PRS-expectedRSTD-uncertainty, which defines a search window around the expectedRSTD.

For DL UE positioning measurement reporting in higher layer parameters DL-PRS-RstdMeasurementInfo or DL-PRS-UE-Rx-Tx-MeasurementInfo the UE can be configured to report the DL PRS resource ID(s) or the DL PRS resource set ID(s) associated with the DL PRS resource(s) or the DL PRS resource set(s) which are used in determining the UE measurements DL RSTD, UE Tx-Rx time difference or the DL PRS-RSRP.

The UE can be configured in higher layer parameter UE Rx-Tx Time-MeasRequestInfo to report multiple UE Rx-Tx time difference measurements corresponding to a single configured SRS resource or resource set for positioning. Each measurement corresponds to a single received DL PRS resource or resource set which can be in difference positioning frequency layers.

---

For the DL RSTD, DL PRS-RSRP, and UE Rx-Tx time difference measurements the UE can report an associated higher layer parameter Timestamp. The Timestamp can include the SFN and the slot number for a subcarrier spacing. These values correspond to the reference which is provided by DL-PRS-RSTDReferenceInfo.

The UE is expected to measure the DL PRS resource outside the active DL BWP or with a numerology different from the numerology of the active DL BWP if the measurement is made during a configured measurement gap. When not configured with a measurement gap, the UE is only required to measure DL PRS within the active DL BWP and with the

same numerology as the active DL BWP. If the UE is not provided with a measurement gap, the UE is not expected to process DL PRS resources on serving or non-serving cells on any symbols indicated as UL by the serving cell. When the UE is expected to measure the DL PRS resource outside the active DL BWP it may request a measurement gap in higher layer parameter [XYZ].

The UE assumes that for the serving cell the DL PRS is not mapped to any symbol that contains SS/PBCH. If the time frequency location of the SS/PBCH block transmissions from non-serving cells are provided to the UE then the UE also assumes that the DL PRS is not mapped to any symbol that contains the SS/PBCH block of the non-serving cell.

The UE may be configured to report, subject to UE capability, up to 4 DL RSTD measurements per pair of cells with each measurement between a different pair of DL PRS resources or DL PRS resource sets within the DL PRS configured for those cells. The up to 4 measurements being performed on the same pair of cells and all DL RSTD measurements in the same report use a single reference timing.

The UE may be configured to measure and report up to 8 DL PRS RSRP measurements on different DL PRS resources from the same cell. When the UE reports DL PRS RSRP measurements from one DL PRS resource set, the UE may indicate which DL PRS RSRP measurements have been performed using the same spatial domain filter for reception.

If the UE is configured with DL-PRS-QCL-Info and the QCL relation is between two DL PRS resources, then the UE assumes those DL PRS resources are from the same cell. If DL-PRS-QCL-Info is configured to the UE with 'QCL-Type-D' with a source DL-PRS-Resource then the DL-PRS-ResourceSetId and the DL-PRS-ResrouceId of the source DL-PRS-Resource are expected to be indicated to the UE.

The UE does not expect to process the DL PRS in the same symbol where other DL signals and channels are transmitted to the UE when there is no measurement gap configured to the UE.

---

<u>UE Positioning Architecture</u>

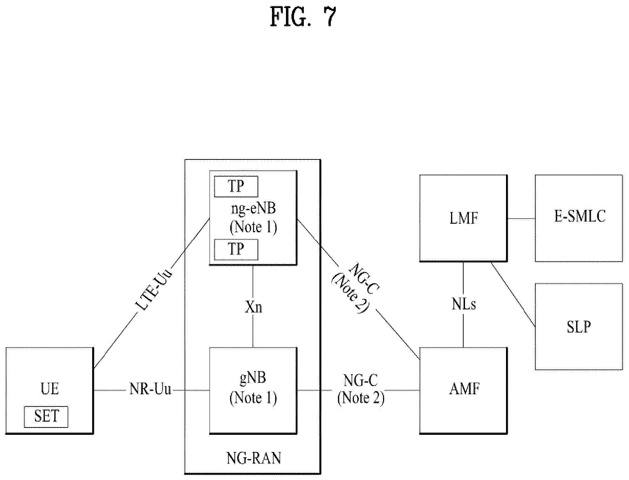

FIG. 7 illustrates an exemplary system architecture for measuring positioning of a UE to which the embodiment is applicable.

Referring to FIG. 7, an AMF may receive a request for a location service associated with a particular target UE from another entity such as a gateway mobile location center (GMLC) or the AMF itself decides to initiate the location service on behalf of the particular target UE. Then, the AMF transmits a request for a location service to a location management function (LMF). Upon receiving the request for the location service, the LMF may process the request for the location service and then returns the processing result including the estimated position of the UE to the AMF. In the case of a location service requested by an entity such as the GMLC other than the AMF, the AMF may transmit the processing result received from the LMF to this entity.

A new generation evolved-NB (ng-eNB) and a gNB are network elements of the NG-RAN capable of providing a measurement result for positioning. The ng-eNB and the gNB may measure radio signals for a target UE and transmits a measurement result value to the LMF. The ng-eNB may control several TPs, such as remote radio heads, or PRS-only TPs for support of a PRS-based beacon system for E-UTRA.

The LMF is connected to an enhanced serving mobile location center (E-SMLC) which may enable the LMF to access the E-UTRAN. For example, the E-SMLC may enable the LMF to support OTDOA, which is one of positioning methods of the E-UTRAN, using DL measurement obtained by a target UE through signals transmitted by eNBs and/or PRS-only TPs in the E-UTRAN.

The LMF may be connected to an SUPL location platform (SLP). The LMF may support and manage different location services for target UEs. The LMF may interact with a serving ng-eNB or a serving gNB for a target UE in order to obtain position measurement for the UE. For positioning of the target UE, the LMF may determine positioning methods, based on a location service (LCS) client type, required quality of service (QoS), UE positioning capabilities, gNB positioning capabilities, and ng-eNB positioning capabilities, and then apply these positioning methods to the serving gNB and/or serving ng-eNB. The LMF may determine additional information such as accuracy of the location estimate and velocity of the target UE. The SLP is a secure user plane location (SUPL) entity responsible for positioning over a user plane.

The UE may measure the position thereof using DL RSs transmitted by the NG-RAN and the E-UTRAN. The DL RSs transmitted by the NG-RAN and the E-UTRAN to the UE may include a SS/PBCH block, a CSI-RS, and/or a PRS. Which DL RS is used to measure the position of the UE may conform to configuration of LMF/E-SMLC/ng-eNB/E-UTRAN etc. The position of the UE may be measured by an RAT-independent scheme using different global navigation satellite systems (GNSSs), terrestrial beacon systems (TBSs), WLAN access points, Bluetooth beacons, and sensors (e.g., barometric sensors) installed in the UE. The UE may also contain LCS applications or access an LCS application through communication with a network accessed thereby or through another application contained therein. The LCS application may include measurement and calculation functions needed to determine the position of the UE. For example, the UE may contain an independent positioning function such as a global positioning system (GPS) and report the position thereof, independent of NG-RAN transmission. Such independently obtained positioning information may be used as assistance information of positioning information obtained from the network.

Operation for UE Positioning

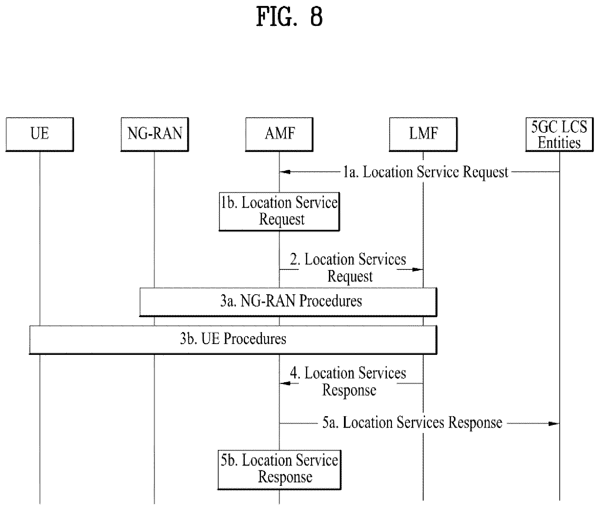

FIG. 8 illustrates an implementation example of a network for UE positioning.

When an AMF receives a request for a location service in the case in which the UE is in connection management (CM)-IDLE state, the AMF may make a request for a network triggered service in order to establish a signaling connection with the UE and to assign a specific serving gNB or ng-eNB. This operation procedure is omitted in FIG. 8. In other words, in FIG. 8 it may be assumed that the UE is in a connected mode. However, the signaling connection may be released by an NG-RAN as a result of signaling and data inactivity while a positioning procedure is still ongoing.

An operation procedure of the network for UE positioning will now be described in detail with reference to FIG. 8. In step 1a, a 5GC entity such as GMLC may transmit a request for a location service for measuring the position of a target UE to a serving AMF. Here, even when the GMLC does not make the request for the location service, the serving AMF may determine the need for the location service for measuring the position of the target UE according to step 1b. For example, the serving AMF may determine that itself will perform the location service in order to measure the position of the UE for an emergency call.

In step 2, the AMF transfers the request for the location service to an LMF. In step 3a, the LMF may initiate location procedures with a serving ng-eNB or a serving gNB to obtain location measurement data or location measurement assistance data. For example, the LMF may transmit a request for location related information associated with one or more UEs to the NG-RAN and indicate the type of necessary location information and associated QoS. Then, the NG-RAN may transfer the location related information to the LMF in response to the request. In this case, when a location determination method according to the request is an enhanced cell ID (E-CID) scheme, the NG-RAN may transfer additional location related information to the LMF in one or more NR positioning protocol A (NRPPa) messages. Here, the "location related information" may mean all values used for location calculation such as actual location estimate information and radio measurement or location measurement. Protocol used in step 3a may be an NRPPa protocol which will be described later.

Additionally, in step 3b, the LMF may initiate a location procedure for DL positioning together with the UE. For example, the LMF may transmit the location assistance data to the UE or obtain a location estimate or location measurement value. For example, in step 3b, a capability information transfer procedure may be performed. Specifically, the LMF may transmit a request for capability information to the UE and the UE may transmit the capability information to the LMF. Here, the capability information may include information about a positioning method supportable by the LFM or the UE, information about various aspects of a particular positioning method, such as various types of assistance data for an A-GNSS, and information about common features not specific to any one positioning method, such as ability to handle multiple LPP transactions. In some cases, the UE may provide the capability information to the LMF although the LMF does not transmit a request for the capability information.

As another example, in step 3b, a location assistance data transfer procedure may be performed. Specifically, the UE may transmit a request for the location assistance data to the LMF and indicate particular location assistance data needed to the LMF. Then, the LMF may transfer corresponding location assistance data to the UE and transfer additional assistance data to the UE in one or more additional LTE positioning protocol (LPP) messages. The location assistance data delivered from the LMF to the UE may be transmitted in a unicast manner. In some cases, the LMF may transfer the location assistance data and/or the additional assistance data to the UE without receiving a request for the assistance data from the UE.

As another example, in step 3b, a location information transfer procedure may be performed. Specifically, the LMF may send a request for the location (related) information associated with the UE to the UE and indicate the type of necessary location information and associated QoS. In response to the request, the UE may transfer the location related information to the LMF. Additionally, the UE may transfer additional location related information to the LMF in one or more LPP messages. Here, the "location related information" may mean all values used for location calculation such as actual location estimate information and radio measurement or location measurement. Typically, the location related information may be a reference signal time difference (RSTD) value measured by the UE based on DL RSs transmitted to the UE by a plurality of NG-RANs and/or E-UTRANs. Similarly to the above description, the UE may transfer the location related information to the LMF without receiving a request from the LMF.

The procedures implemented in step 3b may be performed independently but may be performed consecutively. Generally, although step 3b is performed in order of the capability information transfer procedure, the location assistance data transfer procedure, and the location information transfer procedure, step 3b is not limited to such order. In other words, step 3b is not required to occur in specific order in order to improve flexibility in positioning. For example, the UE may request the location assistance data at any time in order to perform a previous request for location measurement made by the LMF. The LMF may also request location information, such as a location measurement value or a location estimate value, at any time, in the case in which location information transmitted by the UE does not satisfy required QoS. Similarly, when the UE does not perform measurement for location estimation, the UE may transmit the capability information to the LMF at any time.

In step 3b, when information or requests exchanged between the LMF and the UE are erroneous, an error message may be transmitted and received and an abort message for aborting positioning may be transmitted and received.

Protocol used in step 3b may be an LPP protocol which will be described later.

Step 3b may be performed additionally after step 3a but may be performed instead of step 3a.

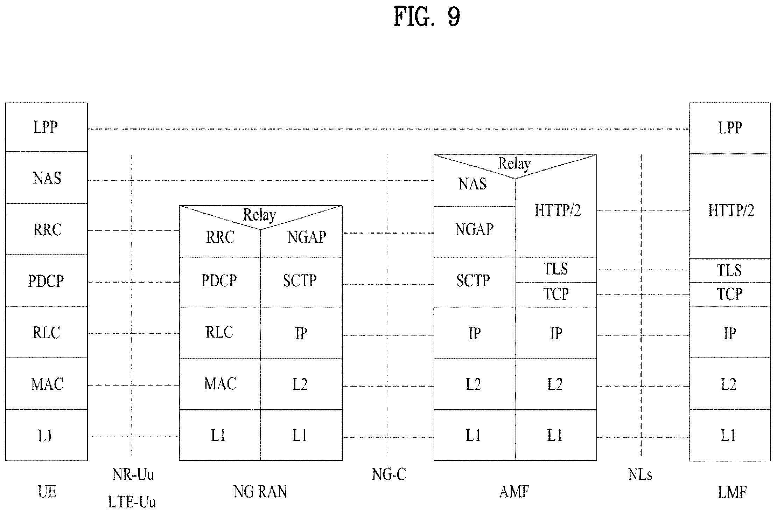

In step 4, the LMF may provide a location service response to the AMF. The location service response may include information as to whether UE positioning is successful and include a location estimate value of the UE. If the procedure of FIG. 8 has been initiated by step 1a, the AMF may transfer the location service response to a 5GC entity such as a GMLC. If the procedure of FIG. 9 has been initiated by step 1b, the AMF may use the location service response in order to provide a location service related to an emergency call.

<u>Positioning Protocol</u>

LTE Positioning Protocol (LPP)

FIG. 9 illustrates an exemplary protocol layer used to support LPP message transfer between an LMF and a UE. An LPP protocol data unit (PDU) may be carried in a NAS PDU between an AMF and the UE.

Referring to FIG. 9, LPP is terminated between a target device (e.g., a UE in a control plane or an SUPL enabled terminal (SET) in a user plane) and a location server (e.g., an LMF in the control plane or an SLP in the user plane). LPP messages may be carried as transparent PDUs cross intermediate network interfaces using appropriate protocols, such an NGAP over an NG-C interface and NAS/RRC over LTE-Uu and NR-Uu interfaces. LPP is intended to enable positioning for NR and LTE using various positioning methods.

For example, a target device and a location server may exchange, through LPP, capability information therebetween, assistance data for positioning, and/or location information. The target device and the location server may exchange error information and/or indicate abort of an LPP procedure, through an LPP message.

NR Positioning Protocol A (NRPPa)

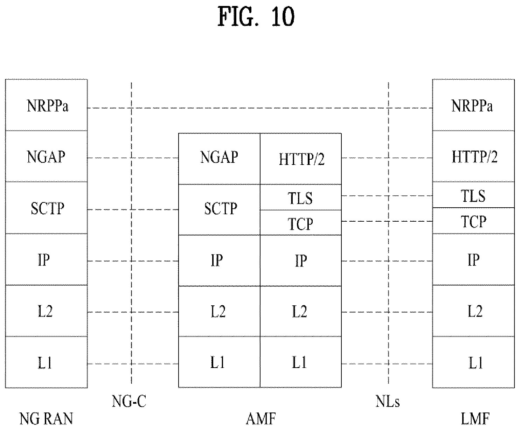

FIG. 10 illustrates an exemplary protocol layer used to support NRPPa PDU transfer between an LMF and an NG-RAN node.

NRPPa may be used to carry information between an NG-RAN node and an LMF. Specifically, NRPPa may carry an E-CID for measurement transferred from an ng-eNB to an LMF, data for support of an OTDOA positioning method, and a cell-ID and a cell position ID for support of an NR cell ID positioning method. An AMF may route NRPPa PDUs based on a routing ID of an involved LMF over an NG-C interface without information about related NRPPa transaction.

An NRPPa procedure for location and data collection may be divided into two types. The first type is a UE associated procedure for transfer of information about a particular UE (e.g., location measurement information) and the second type is a non-UE-associated procedure for transfer of information applicable to an NG-RAN node and associated TPs (e.g., gNB/ng-eNB/TP timing information). The two types may be supported independently or may be supported simultaneously.

Positioning Measurement Method

Positioning methods supported in the NG-RAN may include a GNSS, an OTDOA, an E-CID, barometric sensor positioning, WLAN positioning, Bluetooth positioning, a TBS, uplink time difference of arrival (UTDOA) etc. Although any one of the positioning methods may be used for UE positioning, two or more positioning methods may be used for UE positioning.

OTDOA (Observed Time Difference of Arrival)

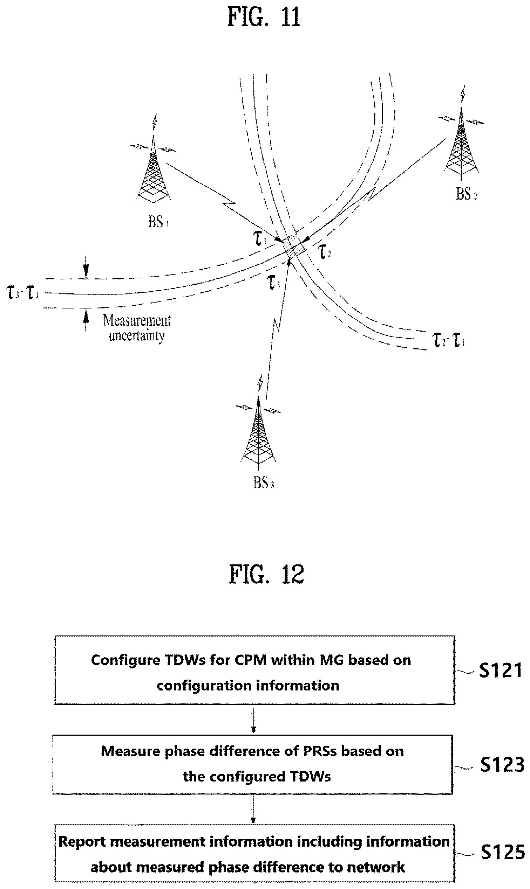

FIG. 11 is a diagram illustrating an observed time difference of arrival (OTDOA) positioning method, to which the embodiment is applicable;

The OTDOA positioning method uses time measured for DL signals received from multiple TPs including an eNB, an ng-eNB, and a PRS-only TP by the UE. The UE measures time of received DL signals using location assistance data received from a location server. The position of the UE may be determined based on such a measurement result and geographical coordinates of neighboring TPs.

The UE connected to the gNB may request measurement gaps to perform OTDOA measurement from a TP. If the UE is not aware of an SFN of at least one TP in OTDOA assistance data, the UE may use autonomous gaps to obtain an SFN of an OTDOA reference cell prior to requesting measurement gaps for performing reference signal time difference (RSTD) measurement.

Here, the RSTD may be defined as the smallest relative time difference between two subframe boundaries received from a reference cell and a measurement cell. That is, the RSTD may be calculated as the relative time difference between the start time of a subframe received from the measurement cell and the start time of a subframe from the reference cell that is closest to the subframe received from the measurement cell. The reference cell may be selected by the UE.

For accurate OTDOA measurement, it is necessary to measure time of arrival (ToA) of signals received from geographically distributed three or more TPs or BSs. For example, ToA for each of TP 1, TP 2, and TP 3 may be measured, and RSTD for TP 1 and TP 2, RSTD for TP 2 and TP 3, and RSTD for TP 3 and TP 1 are calculated based on three ToA values. A geometric hyperbola is determined based on the calculated RSTD values and a point at which curves of the hyperbola cross may be estimated as the position of the UE. In this case, accuracy and/or uncertainty for each ToA measurement may occur and the estimated position of the UE may be known as a specific range according to measurement uncertainty.

For example, RSTD for two TPs may be calculated based on Equation 5 below.

[Equation 5]

$$RSTD_{i,1} = \frac{\sqrt{(x_t-x_i)^2+(y_t-y_i)^2}}{c} - \frac{\sqrt{(x_t-x_1)^2+(y_t-y_1)^2}}{c} + (T_i-T_1)+(n_i-n_1)$$

In Equation 5, c is the speed of light, $\{x_t, y_t\}$ are (unknown) coordinates of a target UE, $\{x_i, y_i\}$ are (known) coordinates of a TP, and $\{x_1, y_1\}$ are coordinates of a reference TP (or another TP). Here, $(T_i-T_1)$ is a transmission time offset between two TPs, referred to as "real time differences" (RTDs), and $n_i$ and $n_1$ are UE ToA measurement error values.

E-CID (Enhanced Cell ID)

In a cell ID (CID) positioning method, the position of the UE may be measured based on geographical information of a serving ng-eNB, a serving gNB, and/or a serving cell of the UE. For example, the geographical information of the serving ng-eNB, the serving gNB, and/or the serving cell may be acquired by paging, registration, etc.

The E-CID positioning method may use additional UE measurement and/or NG-RAN radio resources in order to improve UE location estimation in addition to the CID positioning method. Although the E-CID positioning method partially may utilize the same measurement methods as a measurement control system on an RRC protocol, additional measurement only for UE location measurement is not generally performed. In other words, an additional measurement configuration or measurement control message may not be provided for UE location measurement. The UE does not expect that an additional measurement operation only for location measurement will be requested and the UE may report a measurement value obtained by generally measurable methods.

For example, the serving gNB may implement the E-CID positioning method using an E-UTRA measurement value provided by the UE.

Measurement elements usable for E-CID positioning may be, for example, as follows.

- UE measurement: E-UTRA reference signal received power (RSRP), E-UTRA reference signal received quality (RSRQ), UE E-UTRA reception (Rx)-transmission (Tx) time difference, GERAN/WLAN reference signal strength indication (RSSI), UTRAN common pilot channel (CPICH) received signal code power (RSCP), and/or UTRAN CPICH Ec/Io
- E-UTRAN measurement: ng-eNB Rx-Tx time difference, timing advance (TADV), and/or AoA

Here, TADV may be divided into Type 1 and Type 2 as follows.

$$\text{T}_{ADV} \text{ Type 1} = (\text{ng-eNB Rx-Tx time difference}) + (\text{UE E-UTRA Rx-Tx time difference})$$

$$\text{TADV Type 2} = \text{ng-eNB Rx-Tx time difference}$$

AoA may be used to measure the direction of the UE. AoA is defined as the estimated angle of the UE counterclockwise from the eNB/TP. In this case, a geographical reference direction may be north. The eNB/TP may use a UL signal such as an SRS and/or a DMRS for AoA measurement. The accuracy of measurement of AoA increases as the arrangement of an antenna array increases. When antenna arrays are arranged at the same interval, signals received at adjacent antenna elements may have constant phase rotate.

**CPM (Carrier Phase Measurement)**

Carrier phase measurement (CPM) is one of the position estimation algorithms used in the GPS/GNSS. In brief, the CPM is a scheme of estimating the distance between a transmitter and receiver by measuring the phase of a received transmission signal and determining the position based on the estimated distance. In other words, the position of the user may be measured by calculating the distance to each of the multiple satellites based on signals received from the multiple satellites. In this case, it is assumed that there is a Line of Sight (LoS) between the satellite and the user, and based on this assumption, the time difference between the transmitter and receiver may be translated into the distance between the transmitter and receiver. Meanwhile, satellite channels may experience multi-path and delays due to the ionosphere, but the multi-path and delays caused by the ionosphere may be mitigated through modeling.

Table 7 below shows the matters discussed in relation to (3GPP) CPM in a specific scenario.

[Table 7]

| Justification |
|---|
| Regarding higher accuracy, two promising techniques identified in earlier studies will be considered in Rel-18: one is to take the advantage of the rich 5G spectrum to increase the bandwidth for the transmission and reception of the positioning reference signals based on PRS/SRS bandwidth aggregation for intra-band carriers, and the other is to use the NR carrier phase measurements. GNSS carrier phase positioning has been used very successfully for centimetre-level positioning but is limited to outdoor applications. NR carrier phase positioning has the potential for significant performance improvements for indoor and outdoor deployments in comparison with the existing NR positioning methods, as well as shorter latency and lower UE power consumption in comparison with RTK-GNSS outdoors. |

(continued)

| Objective |
| --- |
| • Improved accuracy, integrity, and power efficiency:<br>o Study solutions for Integrity for RAT dependent positioning techniques [RAN2, RAN1]:<br> ▪ Identify the error sources, [RAN1, RAN2].<br> ▪ Study methodologies, procedures, signalling, etc for determination of positioning integrity for both UE-based and UE-assisted positioning [RAN2]<br> ▪ Focus on reuse of concepts and principles being developed for RAT-Independent GNSS positioning integrity, where possible.<br>o Study solutions for accuracy improvement based on PRS/SRS bandwidth aggregation for intra-band carriers considering e.g. timing errors, phase coherency, frequency errors, power imbalance, etc [RAN4]:<br>o Study solutions for accuracy improvement based on NR carrier phase measurements [RAN1, RAN4]<br> ▪ Reference signals, physical layer measurements, physical layer procedures to enable positioning based on NR carrier phase measurements for both UE-based and UE-assisted positioning [RAN1]<br> ▪ Focus on reuse of existing PRS and SRS, with new reference signals only considered if found necessary<br>o Study the requirements on LPHAP as developed by SA1 and evaluate whether existing RAN functionality can support these power consumption and positioning requirements. Based on the evaluation, and, if found beneficial, study potential enhancements to help address any limitations [RAN2, RAN1]<br> ▪ Study is limited to a single representati LPHAP<br> ▪ ve use case (use case 6 as defined TS 22.104). The choice of selected use case can be reviewed at the start of the study.<br>Study is limited to enhancements to RRC_INACTIVE and/or RRC_IDLE state |

The aforementioned CPM may be compared to code phase measurement. While the code phase measurement is commonly used, in GPS/GNSS-related positioning, the actual phase of a carrier may be directly measured. Typically, the CPM provides higher accuracy than the code phase measurement because the CPM directly measures the phase within a cycle corresponding to the carrier frequency. Meanwhile, the CPM and code phase measurement may be performed based on similar or identical algorithms or methods.

In the CPM, the following fundamental positioning principle may be used: the transmitter transmits a predetermined signal at a specific time, and the receiver measures the exact reception time at the carrier phase level (i.e., within the cycle of the carrier frequency). In this case, the distance between the transmitter and receiver may be measured very accurately based on the CPM. To use such a method, the distance is typically converted into a phase, and a pseudo-range equation may be derived based on the conversion. As CPM positioning based on the pseudo-range equation, positioning based on GNSS/GPS may be performed by applying Equation 6 below.

[Equation 6]

$$p = \rho + d_p + c(dt - dT) + d_{ion} + d_{trop} + e_{mp} + e_p$$

In Equation 6, p denotes pseudo-range measurement, $\rho$ denotes the true range, $d_p$ denotes satellite orbital errors, c denotes the speed of light, $dt$ denotes the satellite clock offset from GPS time, $dT$ denotes the receiver clock offset from GPS time, $d_{ion}$ denotes the ionospheric delay, $d_{trop}$ denotes the tropospheric delay, $e_{mp}$ denotes the multi-path effect, and $e_p$ denotes the receiver noise.

These terms may be considered in the GPS/GNSS, and there are techniques to mitigate or remove each term. Additionally, although it is not explicitly represented in Equation 6, the carrier phase information that the user may estimate is within a range of [0, $2\pi$]. For distances exceeding the range, a separate estimation method is needed. In other words, when the actual distance between the user and the satellite is converted into a phase, the receiver needs to estimate the distance corresponding to an integer multiple of the frequency cycle through a separate estimation method (integer ambiguity resolution).

**Differencing**

Positioning using CPM in the GNSS/GPS may also consider the following factors. Specifically, a cycle slip may occur at the receiver, which may require reporting or correction therefor. The cycle slip may occur when the receiver is incapable of tracking a signal beyond a specific threshold (e.g., a half-cycle). When such a cycle slip occurs, the measurement of the corresponding epoch from the transmitter may become invalid. After the cycle slip, measurements may be reused, but the integer ambiguity needs to be re-estimated.

Additionally, the issue of position dilution (dilution of precision) may also arise. The position dilution means that even when positioning is performed based on the same number of transmitters and receivers and with the same signal-to-noise ratio (SNR), the accuracy of the positioning may vary depending on the relative positions (or distances) between the transmitter and receiver, which is often referred to as geometric dilution of precision (GDOP). For example, when a receiver calculates the position based on signals from N transmitters, the positioning accuracy of the receiver may be lower if the transmitters are closely grouped, compared to when the transmitters are more evenly distributed.

**Integer Ambiguity Resolution**

First, the following may be considered as solutions related to integer ambiguity resolution (refer to Lee, Hongkyu (2014). "An Instantaneous Integer Ambiguity Resolution for GPS Real-Time Structure Monitoring," Journal of Korean Society of Civil Engineers, Vol. 34, No. 1, pp. 342-353 (in Korean)).

In dynamic positioning using GPS carriers, centimeter-level accuracy may be achieved through precise determination of unknown integer ambiguity contained in observation data. To this end, ambiguity resolution, which is a mathematical procedure for converting ambiguous range observation data with uncertainty into a precise range with millimeter-level accuracy, is necessary. For GPS dynamic positioning, it is common to apply the integer-constrained least squares (Teunissen, 1994; Han et al., 1997; Verhagen, 2004).

However, when the receiver is moving, there is a limitation on observation data capable of being used in the mathematical model compared to when the receiver is stationary, resulting in lower estimation precision and higher correlation, which makes it difficult to quickly and accurately resolve the integer ambiguity (Teunissen, 1993; Lee et al., 2005). Therefore, in GPS dynamic positioning, it is common to use the on-the-fly (OTF) method, which extracts and accumulates only the integer ambiguity part of a normal equation. The time required for initializing the integer ambiguity may range from several seconds to several minutes, depending on the satellite geometry and residual errors (Hofmann-Wellenhof et al., 2001). This method depends on the previously determined integer ambiguity after initialization as long as there are no signal interruptions (cycle slips). In this method, when initialization is required, it is not possible to perform high-precision positioning during the initialization period. Additionally, recalculation of the integer ambiguity is required due to changes in the satellite geometry, and continuous monitoring for signal interruptions is necessary, which makes the algorithm inherently complex.

In the mid-1990s, with the emergence of dual-frequency receivers capable of observing a precise pseudo-range, instantaneous ambiguity resolution has been developed for baselines of around 10 km (Han et al., 1996). This method independently resolves the integer ambiguity for each epoch whenever the GPS receiver acquires both the carrier phase and precise pseudo-range. Since the method does not require additional algorithms for checking the signal interruption or satellite geometry, the method is suitable for GPS structural monitoring environments where such interruptions frequently occur due to the structure or passing vehicles. However, the performance of the instantaneous ambiguity resolution is significantly affected by the satellite geometry and residual errors. Particularly, when fewer than five satellites are observed or when multi-path effects become significant, the performance thereof degrades (Lee et al., 2004).

There are a variety of algorithms for performing integer ambiguity resolution, and one of the most well-known and effective methods is least squares ambiguity decorrelation adjustment (LAMBDA). To use the LAMBDA, the float estimate of the position, i.e., the positioning within the cycle should be separated from the integer ambiguity. Since the integer ambiguity is an integer rather than a floating point value, the obtained float solution is not the exact solution and may be further refined. The ellipsoid formed by the covariance of the integer ambiguity becomes extremely elongated in one direction, and as a result, searching within this space is inefficient. Therefore, the LAMBDA transforms the system with the elongated ellipsoid to a system closer to a sphere, which is more efficient than previous methods in searching for solutions to the integer ambiguity.

Another method for estimating integer ambiguity involves using both CPM and code phase measurement at each epoch. The downside of this method is that a time slew value is required to obtain the correlation between the CPM and code phase measurement, and GPS outputs at 1 Hz from the Novatel Superstar II. A brief summary thereof is that the measurement for a single epoch and the covariance of the integer ambiguity from the previous epoch are used. The reason for using the covariance from the previous epoch is that when the receiver maintains phase lock on the carrier phase, the integer ambiguity remains constant across the two epochs. In addition, there are other algorithms for estimating integer ambiguity such as algorithms based on the extended Kalman filter, and there are many variations.

**CPM in NR**

The aforementioned CPM in the GPS/GNSS may be based on a single carrier. Specifically, in the CPM, the phase may be estimated based on the transmission and reception of sinusoidal signals, rather than in the code domain. The CPM between a satellite and user in the GPS/GNSS may be introduced to the gNB (or TRP) and UE in NR. In the introduction thereof to NR, there may be the following differences. Unless the sinusoidal signal is redefined as a reference signal, OFDM-based CPM should be performed. In other words, the OFDM-based CPM differs from GPS/GNSS-based CPM in that the OFDM-based CPM is performed on relatively wideband signals.

First, the current reference signal for positioning in NR is a PRS. If a sinusoidal signal is redefined based on the PRS, the sinusoidal signal may have the configuration characteristics of the PRS. That is, the bandwidth (BW) configuration for the sinusoidal signal may be more flexible. Additionally, the probability of having a LoS path between the BS (or TRP) and the user may be lower than the probability of having a LoS path between the satellite and the user. In other words, since the multi-path effects between the BS (or TRP) and the user are incapable of being ignored, the CPM in NR should also consider the effects of multi-path between the BS (or TRP) and the user. In the CPM in NR, non-line of sight (NLOS) elimination or LOS path estimation may be treated with greater importance from the perspective of algorithms. Additionally, compared to the GPS, NR typically has higher carrier frequencies, larger BWs, and stricter latency requirements. Consequently, in the CPM in NR, the time required to resolve integer ambiguity needs to be further reduced.

Solutions may be needed to address issues related to user positioning based on the CPM using the PRS in NR. Since the PRS is a reference signal with a BW, there should be a common understanding between the higher layers and the UE regarding which frequency within a given PRS is used for phase measurement. In contrast, existing NR positioning methods (e.g., OTDOA, AoA, AoD, etc.) do not require specifying or indicating specific frequency resources. However, in CPM-based positioning using the PRS, an additional operation of specifying or reporting a specific frequency may be required.

**CPM Positioning Method Using PRS**

Hereinafter, a method for the UE to perform CPM by receiving a PRS indicated by the LMF or the gNB will be described. In this case, the UE may receive a time domain window (TDW) indicated along with the CPM. Hereinafter, this will be referred to as the TDW for CPM. The TDW or a domain window (DW) for CPM may be broadly defined as having two purposes. First, the TDW may be used for single, double, or triple differencing, and second, the TDW may be used for SNR boosting for targeting high accuracy for location estimation of the UE. For example, SNR boosting may be performed by combining a plurality of PRSs received within the TDW. In the case of the differencing purpose of the former, the TDW may be set to a minimum length required on the time axis because the TDW may restrict the reception behavior of the UE. On the other hand, in the case of the SNR boosting purpose of the latter, the TDW may be set to be long so that a combining gain (which may vary according to target requirements such as SNR boosting) is maximized because the length on the time axis is directly related to the combining gain. The TDW may be set together with or separately from an existing measurement gap (MG).

In a conventional GNSS/GPS, double differencing may be a technique used to eliminate an offset of a Tx/Rx clock compared to an absolute time. This differencing technique may simply involve a method of measuring reception times of signals transmitted from different Tx ends at a single Rx end and eliminating an Rx clock error, which is a common term, through a difference in the measured reception times (Rx clock error elimination method) and a method of measuring signals transmitted from a single Tx end at different Rx ends and eliminating a Tx clock error, which is a common error term, through a difference in reception times according to measurement. In a packet transmission system such as NR, a clock error may be a timing error due to misinterpretation or misalignment of a slot boundary of the Tx or Rx end. Therefore, similar to a TDW for transmission that maintains phase continuity in joint channel estimation (CE) (although the TDW for CPM is different from the TDW for the joint CE in that the TDW for CPM is a TDW from the perspective of reception), the TDW for CPM may be defined as a time period corresponding to a time period during which a timing error for eliminating different measurement timing errors is maintained.

Hereinafter, Section "1" will describe in detail a method of configuring and indicating the TDW for CPM mentioned above, and Section "2" will describe in detail the behavior of the UE in the TDW for CPM.

Meanwhile, a part described as performing differencing or reporting a differential in measured values may be defined as follows. This may be defined as measuring and reporting a phase difference value between subcarriers of two PRS resources configured by the UE or measuring and reporting a phase difference value between specific carriers (e.g., center carriers) of PRS resources. Additionally, the following description assumes and explains a measurement method based on CPM, but a differencing method described below may also be extended and applied to other positioning techniques. For instance, since differencing is a technique used to eliminate a Tx clock (timing) error and/or an Rx clock (timing) error, the differencing method described below may be easily extended and applied to a timing-based estimation technique (e.g., OTDOA) and an angle-based estimation technique (e.g., AoA or AoD).

## 1. Configuration and Indication Method of TDM for CPM

The TDW for CPM may be configured for differencing or SNR boosting as previously mentioned. In both cases, the TDW for CPM may restrict the reception operation of the UE or the gNB (or TRP) within the TDW. Thus, the TDW for CPM may always be located or configured within an MG or a positioning processing window. For convenience, both the MG and the positioning processing window will be collectively referred to as an MG. In other words, if the UE is instructed to measure and/or report on a configured PRS based on CPM and is configured with the MG, the UE may distinguish the configured MG as the TDW for CPM. For example, when the MG is configured for slot numbers 1 to 9, and the length of the TDW for CPM is configured as 3, the UE may consider or determine that slots 1, 2, and 3 are configured as a first TDW for CPM, slots 4, 5, and 6 are configured as a second TDW for CPM, and slots 7, 8, and 9 are configured as a third TDW for CPM.

In this way, when the TDW for CPM is configured within the MG, the MG for the UE may be configured based on a serving cell, and a PRS may be received from a transmission reception point (TRP) of the serving cell and other TRPs. Therefore, the start and end of the TDW for CPM may vary depending on how the reference of the TDW is configured. Therefore, the following options may be considered to determine a criterion (of the start or end) for determining the TDW for the CPM within the MG by the UE.

(1) Alt. 1-1

The UE may repeatedly configure the TDW based on the number of time slots explicitly indicated and configured in the MG. In other words, a higher node or an LMF may instruct the UE to measure the PRS through CPM and indicate a specific number of slots related to the TDM. Alternatively, the UE may receive an indication of the specific number of slots related to the TDM together with an indication of the MG from the higher node. That is, the UE may receive the indication of the specific number of slots depending on an SCS of the configured MG and perform differencing based on PRSs received within the indicated specific number of slots. Alternatively, the UE may perform joint combining on PRSs received within the specified number of slots when only a single PRS resource set exists within the indicated specified number of slots.

As described above, the MG configured for the UE may be configured based on a slot boundary of the serving cell. If the TDW for CPM is configured according to the indication of the specific number of slots for the CPM, there may be a case in which a PRS resource or a PRS is received across the boundary of the TDW. For example, if the PRS resource fully overlaps with the TDW for CPM (i.e., if the PRS resource is received within the TDW for CPM), the UE may have no issue measuring the PRS resource. However, if the PRS resource partially overlaps with the TDW (i.e., if only part of the PRS resource is received within the TDW), the measurement behavior of the UE based on the PRS resource may become ambiguous. In such a case (partial overlap), the UE may not perform differencing based on the PRS resources through prior agreement or may not perform measurement based on the PRS resource. Even if the PRS resource or the PRS is received within the MG, the UE may not perform measurement and/or reporting, unlike an existing method, for the PRS resource received across the boundary of the TDW or may report information about partial overlap to the network and/or gNB through predefinition or agreement. For example, the UE may report a predefined value (e.g., 0) in a report of RSRP, phase, or phase difference for the PRS resource or PRS received across the boundary of the TDW, and the LMF or network may recognize that the PRS resource crosses the TDW boundary based on the report of the predefined value.

In the above-described manner, when the TDW for CPM is configured, the UE may consider repeatedly placing the TDW for CPM within the MG. The UE may sequentially place the TDW for CPM within the MG. That is, the UE may be configured with an MG for N consecutive slots and may receive an indication of k slots as the size of the TDW (i.e., the specific number of slots mentioned above). In this case, the UE may repeatedly place the TDW of a size of k slots within the MG composed of N slots. Meanwhile, if k or fewer (or equal to or less than) slots remain after the repeated placement of the TDW, the UE may determine that the TDW for CPM is not configured for the remaining slots. Alternatively, the UE may sequentially place a gap between the TDWs within the MG according to the periodicity of a PRS resource set (resource set) (or the periodicity of the received PRS resource). In other words, the UE may place the TDWs within the MG so as to have the gap determined based on the periodicity of the PRS resource set. Alternatively, the UE may explicitly receive an indication for the number of slots for the gap between the TDWs.

For example, if the MG consisting of N consecutive slots, the size of the TDW of k slots, and a gap of j slots between the TDWs are configured, the UE may place the TDW for CPM by repeating (k + j) slots within the MG consisting of N slots. If fewer than k slots remain, the UE may determine that no TDW is configured for the remaining slots.

(2) Alt 1-2

The UE may receive an indication of a TDW or the size of the TDW through the number of PRS resource sets or the number of TRP IDs, etc., and configure the size of the TDW with a minimum time during which the PRS resource sets of the indicated number are received or a minimum time during which PRS resources are received through the TRP IDs of the indicated number.

This method implicitly determines the TDW for CPM. Even if the number of slots constituting the size of the TDW is not explicitly indicated, the size of the TDW may be indirectly derived from parameters configured for the UE (i.e., the number and/or periodicity of TRP IDs or the number and/or periodicity of PRS resource sets).

For example, if the UE is configured with N positioning frequency layers for positioning purposes and f(N) TRP IDs (or different PRS resource set IDs from the same TRP) are indicated for each positioning frequency layer, the UE may derive the TDW (or the size of the TDW) for CPM from the largest or smallest f(N) among the configured f(N). Alternatively, for the positioning frequency layer for which CPM is indicated, the UE may derive the length of the TDW for CPM from the number of TRP IDs (or different PRS resource set IDs from the same TRP) or the number of PRS resource sets included in each positioning frequency layer. When the TDW or the size of the TDW for CPM is derived in this way, the UE may judge or determine the TDW or the size of the TDW based on an SCS indicated in the positioning frequency layer. In this case, the UE may expect or assume that the (configured) PRS resource will always fully overlap within the size of the TDW. That is, the UE may expect that the PRS resource or the PRS on the PRS resource will always be received within the configured TDW for CPM.

In other words, if the size of the TDW is derived from the number of TRP IDs or the number of PRS resource sets as described above, the UE may also determine a start timing of the TDW to correspond to a timing related to the TRP ID or correspond to a start timing of the PRS resource sets. That is, the start timing of the TDW may be determined based on the timing of each TRP or PRS resource set rather than the MG configured by the serving cell.

When the TDW for CPM is configured by the above-described methods, the UE may repeatedly place the TDW for CPM within the MG. The UE may sequentially place the TDW for CPM within the MG in a consecutively placed manner. That is, if the MG consists of N consecutive slots and the size of the TDW is k slots, the UE may repeatedly place the TDW consisting of k slots within the MG consisting of N slots. If fewer than k slots remains for the MG, the UE may determine that no TDW is configured for the remaining slots. Alternatively, the UE may sequentially place the TDW within the MG with a gap between TDWs according to the periodicity of the received PRS resource set such as the periodicity of the PRS resource set or according to an explicit indication of the number of slots of the gap between TDWs. That is, if the MG consists of N slots, the size of the TDW is k slots, and the gap between TDWs is j slots, the UE may place the TDW for CPM by repeating (k + j) slots within the MG consisting of N slots. If fewer than k slots remain, the UE may determine that no TDW is configured for the remaining slots.

When the TDW for CPM is configured as described in Alt. 1-1, Alt. 1-2, etc., it may be determined that the UE is instructed not to perform differencing or combining of PRSs included in different TDWs for CPM. In other words, when the TDW is configured according to the above-mentioned methods, the UE may only perform differencing or combining of PRSs only for PRS resources received within the TDW.

Alternatively, when the TDW for CPM is configured by the method such as Alt. 1-1 or Alt. 1-2 or when the LMF configures the TDW for CPM, the following methods may be considered. For example, the following elements or parameters may be considered as factors for determining the size, M, of the TDW for CPM.

The size, M, of the TDW may be derived from a time period X during which the UE may maintain a maximum reception timing and/or phase continuity (a time period that the LMF is expected to be known due to report on capability of the UE or assistance information) and a time period Y during which a transmission end (an entity, such as a TRP or a gNB, that transmits a PRS to the UE, for example, a positioning reference unit) may maintain a maximum transmission timing and/or phase continuity. In this case, the LMF or the network may configure M determined based on the time period X and the time period Y as the size of the TDW for the UE. For example, the size of the TDW may be determined based on a predefined function between X and Y, such as the smaller value between the time period X and the time period Y or the greatest common divisor of the time period X and the time period Y. The determined size of the TDW may be configured for or indicated to the UE through assistance information or system information. Alternatively, the size of the TDW determined by a separate method without considering X and Y may be indicated to the UE through the assistance information or the system information.

Alternatively, after receiving the configuration and indication of the TDW for CPM, it may be determined that the UE is explicitly or implicitly instructed to perform measurement/report for differencing. In this case, when the UE performs differencing for the PRS resources (PRS resource sets) received in k slots (i.e., when the TDW for CPM is configured using the methods described above), the UE may repeatedly place the TDW having a size of k for CPM within the MG configured for M slots (when k < M). When the TDW is repeatedly placed within the M slots, a starting offset related to a position at which the repetition of the TDW is started may be considered. For example, M may be slots 1 to 10, k may be 2 slots, and the starting offset N may be 3. In this case, the UE may repeatedly place a first TDW for slots 3 and 4, a second TDW for slots 5 and 6, a third TDW for slots 7 and 8, and a fourth TDW for slots 9 and 10 within the MG and perform differencing based on each TDW.

The starting offset described above may be configured based on a reception timing of a PRS resource received by the UE from a specific TRP (e.g., a reference TRP). Here, the reference TRP may be either a specific TRP indicated to the UE by the LMF through the assistance information or one of specific TRPs configured through prior agreement or arrangement. Therefore, the UE may configure the TDW (or window) for differencing based on the reception timing of the PRS resource received from the reference TRP and perform differencing for the PRS resources received within the TDW.

In other words, the UE may be configured with the size of the TDW and the MG from the LMF or the network and may determine the starting position or starting offset of the TDW based on the reception timing of the PRS transmitted from the reference TRP. In this case, the UE may repeatedly place the TDW starting from a slot or a timing after the starting offset from the start timing of the MG.

## 2. Behavior of UE in TDW for CPM

For the time period of the TDW configured using the method in "1" above, the UE may determine that a specific behavior is restricted or a specific behavior is instructed to be performed. In this regard (or for the performance or restriction of the specific behavior), a description may be given in terms of differencing between measurements and other behavior aspects of the UE.

(1) Behavior of UE Related to Measurement (Especially Differencing)

Differencing within the TDW for CPM by the UE may be performed based on an explicit indication from the network (or gNB) or an implicit rule according to configuration of the TDW. Detailed rules related thereto are as follows.

1) Alt. 2-1: Implicit Indication for Differencing

The TDW may be indicated separately from whether differencing is performed. Here, whether differencing is performed may be implicitly indicated. When PRSs are received from different TRPs (or different PRS resource sets from the same TRP) within the TDW, the UE may measure and report a phase difference value of the PRSs between the TRPs (PRS resource sets) or report a differential between measured values. In other words, upon reporting measurement results based on the PRSs, the UE may report a measured phase difference or a value derived from the phase difference. If PRS(s) are received from a single TRP (PRS resource set) within the TDW, the UE may perform measurement by combining the PRSs. That is, in the measurement and reporting of the measurement results for the PRSs, the UE may report a measured phase or a value derived from the measured phase.

In other words, upon receiving the PRSs transmitted from different TRPs within the TDW, the UE may determine that differencing is implicitly instructed to be performed, measure a phase difference value between the PRSs, and report a measured result value. On the other hand, if only PRS(s) transmitted from the same TRP are received within the TDW, the UE may determine that phase measurement for CPM, not differencing, is instructed and measure and report a phase value (i.e., a combined phase value of the PRSs rather than a phase difference between two PRSs) based on the combination of the PRSs.

For example, if the LMF designates a positioning frequency layer for positioning based on CPM for the UE and only a single TRP ID (or different PRS resource set IDs from the same TRP) exists in the positioning frequency layer, the UE may determine that phase measurement for CPM, based on joint combining without configuration of differencing, is configured. Here, joint combining may refer to boosting a received SNR by combining a plurality of PRSs having frequency resources on which symbol positions within the same slot are identical. Alternatively, joint combining may refer to a method in which, when PRS resources with different staggered RE patterns are received from the same TRP (PRS resource set), measurement results for the PRS resources with the different patterns in a frequency domain are added (combined) to consider that PRSs of continuous REs with large BW is received. In this case, the UE may perform measurement and reporting based on the PRSs of the continuous REs.

2) Alt. 2-2: Explicit Indication for Differencing

An indication for the TDW and an indication for differencing may be performed jointly or the indication for differencing and the indication for the TDW may be performed separately from the indication for the TDW. For example, only when the UE is explicitly instructed by the LMF to perform differencing, the UE may measure/report a phase difference between PRSs received from different TRPs (or received from different PRS resource sets of the same TRP) or report a differential of measured values. In the absence of such an explicit indication, the UE may perform measurement/reporting by jointly combining PRSs received from a plurality of different TRPs (or from different PRS resource sets of the same TRP). Alternatively, in the absence of the explicit indication, the UE may perform measurement/reporting by jointly combining PRSs received from the same TRP. Alternatively, when the indication for the TDW and the indication for differencing are jointly combined, the UE may determine that the indication for differencing is given through the indication for the TDW.

(2) Behavior Aspect of UE Other Than Measurement (Differencing)

A specific behavior of the UE within a TDW for CPM may be restricted. This serves to limit the change in a time/clock offset for PRSs measured by the UE within the configured TDW for CPM to a certain range (a range of a negligible level).

Firstly, the UE needs to maintain the same receiving slot boundary within the TDW. In other words, the UE may change the receiving slot boundary only at the boundary of the TDW. Alternatively, if the slot boundary is changed, the UE may reflect or report this change in the slot boundary for measurement.

Secondly, the UE may fix a phase locked loop (PLL) to maintain an initial phase within the configured TDW. Alternatively, the PLL for guaranteeing phase continuity may not be fixed according to the PLL capability of the UE or a stable level of the PLL. For example, the MG may be started before a clock error stabilizes (i.e., the MG may be started before the PLL becomes stable) after the UE transitions from a sleep state to another state (wakeup state) to activate the PLL. In this case, not only will an inaccurate clock offset continue to change, but also a very inaccurate value (e.g., clock offset value) may be used. In this way, if phase continuity or a timing error is incapable of being maintained, even when the UE is configured with the TDW for CPM and receives the PRS in a TDW period, the UE may exceptionally not perform measurement/reporting or may report that measurement/reporting has not been performed. In other words, if the UE is instructed to perform measurement before the PLL stabilizes, the UE may exceptionally not perform measurement/reporting as instructed without fixing the PLL.

Alternatively, when the TDW for CPM is used for a differencing purpose, the UE may determine that the UE has been instructed to maintain a receiving timing, an Rx beam, a channel coefficient, etc., within the TDW.

The above-described behavior of the UE may be broadly categorized into two cases. Firstly, a time period for performing accumulation within the TDW for CPM configured by the UE may be included, and secondly, a time period for performing differencing within the TDW for CPM configured by the UE may be included. In other words, from the perspective of the UE, the TDW includes a continuous time period for boosting a received SNR and a continuous time period for eliminating an error from a received PRS resource. In all cases, the UE may determine that differencing or accumulation may be performed only within a time period smaller than the TDW for CPM configured by the LMF or the gNB using the method as in section "1". Here, accumulation may refer to a reception technique for boosting the received SNR using a method such as joint decoding.

Under these assumptions, the UE may report, to the LMF, a request for the size M of the TDW for CPM configured by the LMF or the gNB according to preference or a measurement result of the received PRS resource. In other words, the UE may report or request a preferred size related to the size of the TDW or a determined size based on the measurement result. For example, although accumulation has been performed on a PRS resource received in a time period smaller than the TDW for CPM configured for the UE, if an SNR according to accumulation is equal to or below a specific threshold or if the received SNR of the measured PRS resource without performing accumulation is a specific threshold, the UE may not report the measurement value of the PRS resource received in each case or a derived value from the measurement value to the LMF. Instead, the UE may request (through assistance information) the LMF or the network to configure the size of the TDW as a value larger than the configured size. Alternatively, although the UE has performed differencing on the PRS resource received within a time period smaller than the configured CTDW, if the received SNR of the PRS is equal or less than a specific threshold or if the received SNR value of the PRS resource without performing differencing is equal to or less than the specific threshold, the UE may request the LMF to configure the size of the TDW as a larger size (through the assistance information) than the size of the TDW without reporting the measurement value for the PRS resource or a derived value based on the measurement value. In other words, if the SNR of the PRS related to differencing is equal to or less than the specific threshold, the UE may request the LMF to increase the size of the TDW. In contrast, if the SNR quality of the PRS(s) measured by the UE is sufficient, the UE may request the LMF to configure the size of the TDW as a smaller value than the size of the TDW. In other words, if the SNR quality of the measured PRS(s) is sufficient, the UE may request the LMF to reduce the size of the TDW.

Alternatively, the UE may request the LMF to configure the size of the TDW as a larger or smaller value (through the assistance information) according to preference of the UE separately from a procedure or a result measured by the UE within the configured TDW for CPM. For example, this may prevent transmission and reception with a serving cell from being restricted when an MG configured by the UE to perform differencing or accumulation or a time period of the TDW is long. In other words, in order to minimize the restrictions on transmission and reception with the serving cell, the UE may request the LMF to reduce the time period of the MG or the size of the TDW separately from CPM measurement.

FIG. 12 is a diagram illustrating a method for a UE to perform CPM.

Referring to FIG. 12, the UE may receive, from a network, configuration information for sequentially and repeatedly configuring a TDW for CPM within an MG (S121). As described earlier, the TDW is a time period for measuring/calculating a carrier phase value for positioning or a phase difference value between carriers for performing differencing related to positioning. The TDW may be configured based on the configuration method described in "1" above. For convenience of description, it is assumed that the UE measures/calculates the phase difference for differencing during a time period corresponding to the TDW.

Specifically, the UE may determine the size of the TDW based on a specific number of slots or a specific number of symbols included in the configuration information and may configure/determine TDWs in which the TDW having the determined size is sequentially repeated within the MG. Alternatively, the UE may determine the size of the TDW based on the number of PRS resource sets or the number of TRP IDs included in the configuration information and configure/determine the TDWs in which the TDW having the determined size is sequentially repeated within the MG.

Alternatively, the UE may determine the size of the TDW based on the number of TRP IDs or the number of PRS resource set IDs configured in a positioning frequency layer configured for the UE and configure/determine the TDWs in which the TDW having the determined size is sequentially repeated within the MG. For example, if the number of PRS resource sets configured in the positioning frequency layer is N, the UE may determine a time period during which all of the N PRS resource sets are received as the size of the TDW.

Alternatively, the UE may determine a start timing at which the configuration of the TDW is started within the MG based on a PRS signal received from a reference TRP related to the PRS. For example, the UE may receive information about the reference TRP or a reference PRS resource set related to CPM from the network. In this case, upon receiving a PRS from the reference TRP or the reference PRS resource set within the MG, the UE may determine, as the start timing of the TWD within the MG, a timing corresponding to a reception timing of the PRS (e.g., a timing at which reception of the PRS transmitted from the reference TRP is started or a timing at which the reception of the PRS included in the reference PRS resource set is started).

Alternatively, the UE may configure or specify the TDWs within the MG based on the configuration information including information about the size of the TDW and a gap between the TDWs. For example, the UE may configure (or specify) the TDWs in which the TDW having the size of the TDW are sequentially repeated within the MG and the TDWs may be separated from each other by the gap.

Alternatively, the UE may receive the configuration information including information about the size of the TDW determined based on a maximum time period during which the UE may maintain phase continuity. For example, the UE may transmit capability information regarding the maximum time period for maintaining phase continuity in relation to the reception of a signal to the network. In this case, the network may determine the size of the TDW for the UE based on the maximum time period included in the capability information and transmit the configuration information for configuring the TDWs having the determined size of the TDW. Alternatively, the network may determine, as the size of the TDW, a time period of a smaller size of the maximum time period included in the capability information and the maximum time period for maintaining phase continuity in relation to signal transmission at a transmission end.

Next, the UE may measure a phase difference of PRSs based on the configuration information (S123). In other words, the UE may measure/calculate the phase difference of the PRSs based on the TDWs configured by the configuration information. The measurement of the phase difference may be performed according to the behavior of the UE described in section "2" and/or the measurement behavior of the UE described in section "1".

For example, the UE may measure the phase of each of two PRSs received within the TDW and calculate a difference between the phases of the two PRSs to measure/calculate the phase difference. Meanwhile, the PRSs used for the measurement of the phase difference should be received within the same TDW. For example, the UE may receive at least one PRS in each of the TDWs configured based on the configuration information. In this case, the UE does not calculate/measure the phase difference for the PRSs received in different TDWs. That is, the UE may measure the phase difference only for the PRSs received in the same TDW. This is because a phase offset of the transmission end that transmits the PRSs or a phase offset of the UE is guaranteed to be maintained during a time period of one TDW, but the consistency of the phase offset of the transmission end or the phase offset of the UE is not guaranteed between different TDWs. To this end, the UE needs to fix a PLL during the TDW period.

Alternatively, the UE may measure/calculate the phase difference based on PRSs or PRS resources received from different TRPs (or different TRP IDs) within the same TDW.

Alternatively, the UE may determine whether to measure the phase difference or a single phase (i.e., instead of measurement of the difference between two phases) according to whether the PRSs received in the same TDW have been transmitted from different TRPs. For example, if only the PRSs transmitted from the same TRP are received within the same TDW, the UE may determine that the UE has been instructed to perform phase-based positioning (not differencing) and may measure a single phase as measurement information regarding the TDW. On the other hand, if the PRSs transmitted from different TRPs are received within the same TDW, the UE may determine that the UE has been instructed to perform measurement based on differencing and may measure the phase difference, which is the difference between the phases measured for each of the two TRPs.

Next, the UE may report measurement information including information about the measured phase difference to the network (S125). As mentioned earlier, if a PRS is received across a TDW boundary, the UE may also report that the PRS has been received across the TDW boundary.

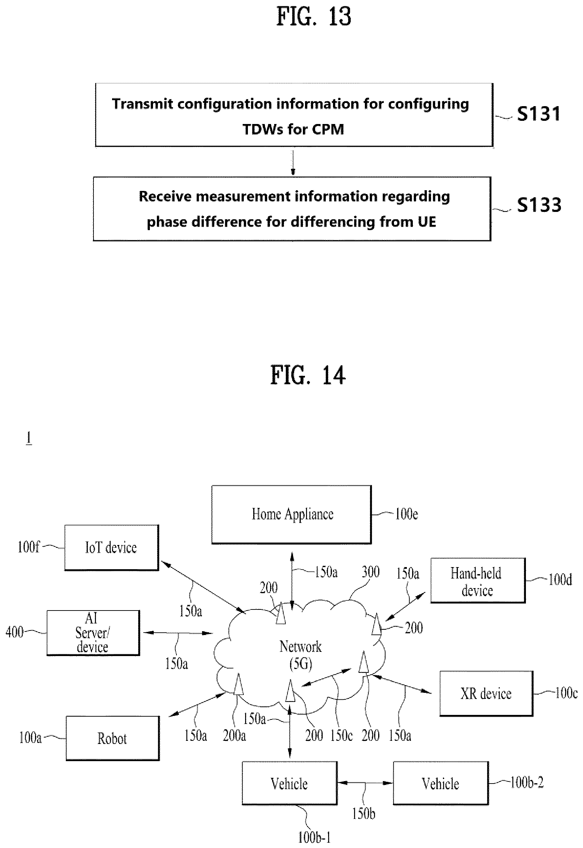

FIG. 13 is a diagram illustrating a method for a network to receive a report on measurement information related to CPM from a UE.

Referring to FIG. 13, the network may transmit, to the UE, configuration information for sequentially and repeatedly configuring a TDW for CPM within an MG (S131). As described above, the network may be a serving cell, a gNB, and/or an LMF. Here, the TDW, as described earlier, is a time period for measuring/calculating a carrier phase value for positioning or a phase difference value between carriers for performing differencing related to positioning. The TDW may be configured based on the configuration method described in section "1" above.

For example, the network may transmit, to the UE, the configuration information including a specific number of slots, a specific number of symbols, the number of PRS resource sets, the number of TRPs, and/or information related to a specific size, for determining the size of the TDW.

Next, the network may receive, from the UE, measurement information regarding the phase difference for differencing (S133). As mentioned above, the phase difference is related to differencing for eliminating a clock error at the transmission end or reception end and may be a difference of phases measured for PRSs received only within the same TDW among the repeatedly configured TDWs. For example, the phase difference may be calculated based on PRSs or PRS resources received within the same TDW, and these PRSs may be transmitted from different TRPs or cells.

In this way, the UE may report, to the network, information regarding the phase difference for effectively eliminating a timing error in CPM through the configuration of a TDW in which phase continuity is guaranteed. That is, since the UE may measure/calculate the phase difference using only PRSs received within the TDW in which phase continuity is ensured, a common error element between the transmission ends or between the reception ends may be effectively removed from the phase difference.

## Communication system example to which the present disclosure is applied

Although not limited thereto, various descriptions, functions, procedures, proposals, methods, and/or operational flow charts of the present disclosure disclosed in this document may be applied to various fields requiring wireless communication/connection (5G) between devices.

Hereinafter, it will be illustrated in more detail with reference to the drawings. In the following drawings/description, the same reference numerals may exemplify the same or corresponding hardware blocks, software blocks, or functional blocks, unless otherwise indicated.

FIG. 14 illustrates a communication system applied to the present disclosure.

Referring to FIG. 14, a communication system 1 applied to the present disclosure includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous driving vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g., Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/DL communication 150a, sidelink communication 150b (or, D2D communication), or inter BS communication (e.g., relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

**Examples of wireless devices to which the present disclosure is applied**

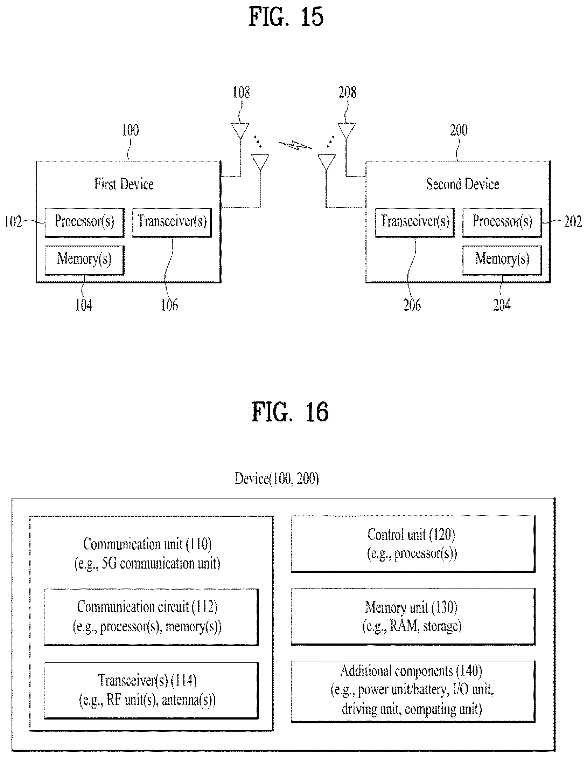

FIG. 15 illustrates a wireless device applicable to the present disclosure.

Referring to FIG. 15, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 14.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information acquired by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

According to one example, the first wireless device 100 or the UE may include the processor(s) 102 connected to the RF transceiver(s) and include the memory(s) 104. The memory(s) 104 may include at least one program capable of performing operations related to the embodiments described with reference to FIGS. 10 to 13.

Specifically, the processor(s) 102 may control the RF transceiver(s) 106 to receive configuration for sequentially and repeatedly configuring a TDW for CPM within an MG from the network, measure a phase difference of PRSs based on the configuration information, and report measurement information regarding the phase difference to the network. Here, the measurement of the phase difference is performed using only the PRSs received within the same TDW.

Alternatively, a chipset including the processor(s) 102 and the memory(s) 104 may be configured. In this case, the chipset includes the processor(s) 102 and the memory(s) configured to cause the processor(s) 102 to perform operations. The operations may include receiving configuration information for sequentially and repeatedly configuring a TDW for CPM within an MG from a network, measuring a phase difference of PRSs based on the configuration information, and reporting measurement information regarding the phase difference to the network. Herein, the phase difference is measured using only the PRSs received within the same TDW.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information acquired by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

According to one embodiment, the BS or the network may include the processor(s) 202, the memory(s) 204, and/or the transceiver(s) 206. The processor(s) 202 may control the transceiver(s) 206 or the RF transceiver(s) to transmit configuration information for sequentially and repeatedly configuring a TDW for carrier phase measurement within an MG to the UE, and measure a phase difference of PRSs based on the configuration information. Herein, the measurement information includes the phase difference measured using only the PRSs received within the same TDW.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

**Examples of application of wireless devices to which the present invention is applied**

FIG. 16 illustrates another example of a wireless device applied to the present disclosure.

Referring to FIG. 16, wireless devices 100 and 200 may correspond to the wireless devices 100 and 200 of FIG. 15 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 15. For example, the transceiver(s) 114 may include the one or more transceivers 106 and 206 and/or the one or more antennas 108 and 208 of FIG. 15. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 14), the vehicles (100b-1 and 100b-2 of FIG. 14), the XR device (100c of FIG. 14), the hand-held device (100d of FIG. 14), the home appliance (100e of FIG. 14), the IoT device (100f of FIG. 14), a digital broadcast terminal, a hologram device, a public safety device, an MTC device, a medicine device, a fintech device (or a finance device), a security device, a climate/environment device, the AI server/device (400 of FIG. 14), the BSs (200 of FIG. 14), a network node, etc. The wireless device may be used in a mobile or fixed place according to a use-example/service.

In FIG. 16, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

Here, wireless communication technologies implemented in the wireless devices (XXX, YYY) of the present specification may include LTE, NR, and 6G, as well as Narrowband Internet of Things for low power communication. At this time, for example, the NB-IoT technology may be an example of a Low Power Wide Area Network (LPWAN) technology, and may be implemented in standards such as LTE Cat NB1 and/or LTE Cat NB2, and is not limited to the above-described names. Additionally or alternatively, the wireless communication technology implemented in the wireless devices (XXX, YYY) of the present specification may perform communication based on LTE-M technology. In this case, as an example, the LTE-M technology may be an example of LPWAN technology, and may be referred to by various names such as eMTC (enhanced machine type communication). For example, LTE-M technology may be implemented in at least one of a variety of standards, such as 1) LTE CAT 0, 2) LTE Cat M1, 3) LTE Cat M2, 4) LTE non-BL (non-Bandwidth Limited), 5) LTE-MTC, 6) LTE Machine Type Communication, and/or 7) LTE M, and is not limited to the above-described names. Additionally or alternatively, the wireless communication technology implemented in the wireless devices (XXX, YYY) of the present specification is at least one of ZigBee, Bluetooth, and Low Power Wide Area Network (LPWAN) considering low power communication, and is not limited to the above-described names. As an example, ZigBee technology may generate personal area networks (PANs) related to small/low-power digital communication based on various standards such as IEEE 802.15.4, and may be called various names.

The embodiments described above are those in which components and features of the present disclosure are combined in a predetermined form. Each component or feature should be considered optional unless explicitly stated otherwise. Each component or feature may be implemented in a form that is not combined with other components or features. In addition, it is also possible to constitute an embodiment of the present disclosure by combining some components and/or features. The order of operations described in the embodiments of the present disclosure may be changed. Some configurations or features of one embodiment may be included in other embodiments, or may be replaced with corresponding configurations or features of other embodiments. It is obvious that the embodiments may be configured by combining claims that do not have an explicit citation relationship in the claims or may be included as new claims by amendment after filing.

In this document, embodiments of the present disclosure have been mainly described based on a signal transmission/reception relationship between a terminal and a base station. Such a transmission/reception relationship is extended in the same/similar manner to signal transmission/reception between a terminal and a relay or a base station and a relay. A specific operation described as being performed by a base station in this document may be performed by its upper node in some cases. That is, it is obvious that various operations performed for communication with a terminal in a network comprising a plurality of network nodes including a base station may be performed by the base station or network nodes other than the base station. The base station may be replaced by terms such as a fixed station, a Node B, an eNode B (eNB), an access point, and the like. In addition, the terminal may be replaced with terms such as User Equipment (UE), Mobile Station (MS), Mobile Subscriber Station (MSS).

In a hardware configuration, the embodiments of the present disclosure may be achieved by one or more application specific integrated circuits (ASICs), digital signal processors (DSPs), digital signal processing devices (DSPDs), programmable logic devices (PLDs), field programmable gate arrays (FPGAs), processors, controllers, microcontrollers, microprocessors, etc.

In a firmware or software configuration, a method according to embodiments of the present disclosure may be implemented in the form of a module, a procedure, a function, etc. Software code may be stored in a memory unit and executed by a processor. The memory unit is located at the interior or exterior of the processor and may transmit and receive data to and from the processor via various known means

As described before, a detailed description has been given of preferred embodiments of the present disclosure so that those skilled in the art may implement and perform the present disclosure. While reference has been made above to the preferred embodiments of the present disclosure, those skilled in the art will understand that various modifications and alterations may be made to the present disclosure within the scope of the present disclosure.

**Industrial Applicability**

The above-described embodiments of the present disclosure are applicable to various mobile communication systems.

**Claims**

1. A method of performing carrier phase measurement by a user equipment (UE) in a wireless communication system, the method comprising:

   receiving configuration information for sequentially and repeatedly configuring a time domain window (TDW) for the carrier phase measurement within a measurement gap from a network;
   measuring a phase difference of positioning reference signals (PRSs) based on the configuration information; and
   reporting measurement information regarding the phase difference to the network,
   wherein the phase difference is measured using only the PRSs received within a same TDW.

2. The method of claim 1, wherein a size of the TDW is determined based on a specific number of slots or a specific number of symbols included in the configuration information.

3. The method of claim 1, wherein a size of the TDW is determined based on the number of PRS resource sets or the number of transmission reception points (TRPs) included in the configuration information.

4. The method of claim 1, wherein a size of the TDW is determined based on the number of transmission reception points (TRPs) or the number of PRS resource sets configured in a positioning frequency layer configured for the UE.

5. The method of claim 1, wherein the configuration information includes information about a size of the TDW and a gap between TDWs.

6. The method of claim 1, wherein a size of the TDW is determined based on a maximum time period during which the UE maintains phase continuity.

7. The method of claim 1, wherein the configuration information includes information about a reference transmission reception point (TRP) related to a PRS.

8. The method of claim 7, wherein the TDW is repeatedly configured from a specific timing within the measurement gap, and

   wherein the specific timing is determined based on a timing at which the PRS is received from the reference TRP within the measurement gap.

9. The method of claim 1, wherein the UE fixes a phase locked loop (PLL) during a time period of the TDW.

10. A computer-readable recording medium in which a program for performing the method of claim 1 is recorded.

11. A user equipment (UE) for performing carrier phase measurement in a wireless communication system, the UE comprising:

    a radio frequency (RF) transceiver; and
    a processor connected to the RF receiver,
    wherein the processor controls the RF transceiver to receive configuration information for sequentially and repeatedly configuring a time domain window (TDW) for the carrier phase measurement within a measurement gap from a network, measures a phase difference of positioning reference signals (PRSs) based on the configuration information, and reports measurement information regarding the phase difference to the network, and
    wherein the phase difference is measured using only the PRSs received within a same TDW.

12. A method of receiving a report on measurement information from a user equipment (UE) by a network in a wireless communication system, the method comprising:

    transmitting configuration information for sequentially and repeatedly configuring a time domain window (TDW) for carrier phase measurement within a measurement gap to the UE; and
    measuring a phase difference of positioning reference signals (PRSs) based on the configuration information, wherein the measurement information includes the phase difference measured using only the PRSs received within a same TDW.

13. The method of claim 12, wherein a size of the TDW is indicated based on the configuration information including a specific number of slots or a specific number of symbols.

14. The method of claim 12, wherein a size of the TDW is indicated based on the configuration information including the number of PRS resource sets or the number of transmission reception point (TRP) identifiers (IDs).

15. A chipset for performing carrier phase measurement in a wireless communication system, the chipset comprising:

    at least one processor; and
    at least one memory operatively connected to the at least one processor and configured to cause, when executed, the at least one processor to perform operations,
    wherein the operations include receiving configuration information for sequentially and repeatedly configuring a time domain window (TDW) for the carrier phase measurement within a measurement gap from a network, measuring a phase difference of positioning reference signals (PRSs) based on the configuration information, and reporting measurement information regarding the phase difference to the network, and
    wherein the phase difference is measured using only the PRSs received within a same TDW.

# FIG. 1

# FIG. 2

# FIG. 3

| ··· | One Frame (10ms) | ··· |

| ··· | Half-Frame (5ms) | Half-Frame (5ms) | ··· |

| ··· | Subframe 0 (1ms) | ··· | Subframe 4 (1ms) | Subframe 5 (1ms) | ··· | Subframe 9 (1ms) | ··· |

Subframe (1ms)

| 15KHz | Slot 0 (14symbols) |

1ms

| 30KHz | Slot 0 (14symbols) | Slot 1 |

500us

| 60KHz | Slot 0 (14symbols) | Slot 1 | Slot 2 | Slot 3 |

250us

| 120KHz | Slot 0 (14symbols) | Slot 1 | Slot 2 | Slot 3 | Slot 4 | Slot 5 | Slot 6 | Slot 7 |

125us

# FIG. 4

Resource grid

# FIG. 5

Initial Cell Search | System Information Reception | Random Access Procedure | General DL/UL Tx/Rx

**S18**

| P/S - SCH & [DLRS] & PBCH | PDCCH/ PDSCH (BCCH) | PRACH | PDCCH/ PDSCH | PRACH | PDCCH/ PDSCH | PDCCH/ PDSCH | PUSCH/ PUCCH |

S11    S12    S13    S14    S15    S16    S17    • DL/UL ACK/NACK
• UE CQI/PMI/Rank Report using PUSCH and PUCCH

EP 4 572 444 A1

# FIG. 6

Reference Source

GNSS signals (B)

LPP

Measurements(A,B or A+B) or Location

Assistance Data

Target Device

UE/SET

Location server

E-SMLC/SLP/LMF

radio signals (A)

Reference Source

ACCESS NODE / BS / TS / NG-RAN

NRPPa

- E-CID Location Information Transfer
- OTDOA Information Transfer
- Reporting of General Error Situations

**FIG. 7**

# FIG. 8

# FIG. 9

| UE | | NG RAN | | AMF | | LMF |
|---|---|---|---|---|---|---|
| LPP | | | | | | LPP |
| NAS | | | | Relay NAS | HTTP/2 | HTTP/2 |
| RRC | | Relay RRC | NGAP | NGAP | | |
| PDCP | | PDCP | SCTP | SCTP | TLS | TLS |
| | | | | | TCP | TCP |
| RLC | | RLC | IP | IP | IP | IP |
| MAC | | MAC | L2 | L2 | L2 | L2 |
| L1 | | L1 | L1 | L1 | L1 | L1 |

NR-Uu
LTE-Uu

NG-C

NLs

EP 4 572 444 A1

# FIG. 10

NG RAN: NRPPa, NGAP, SCTP, IP, L2, L1

AMF: NGAP / HTTP/2, SCTP / TLS, TCP, IP / IP, L2 / L2, L1 / L1

LMF: NRPPa, HTTP/2, TLS, TCP, IP, L2, L1

NG-C    NLs

NG RAN    AMF    LMF

EP 4 572 444 A1

# FIG. 11

# FIG. 12

| Configure TDWs for CPM within MG based on configuration information | ~ S121 |
| Measure phase difference of PRSs based on the configured TDWs | ~ S123 |
| Report measurement information including information about measured phase difference to network | ~ S125 |

## FIG. 13

| Transmit configuration information for configuring TDWs for CPM | ~ S131 |

| Receive measurement information regarding phase difference for differencing from UE | ~ S133 |

## FIG. 14

1

# FIG. 15

# FIG. 16

Device(100, 200)

## INTERNATIONAL SEARCH REPORT

| | International application No. |
|---|---|
| | **PCT/KR2023/011328** |

### A. CLASSIFICATION OF SUBJECT MATTER

**H04W 64/00**(2009.01)i; **H04W 24/08**(2009.01)i; **H04W 56/00**(2009.01)i; **G01S 5/02**(2010.01)i; **H04L 5/00**(2006.01)i; **H04W 24/10**(2009.01)i

According to International Patent Classification (IPC) or to both national classification and IPC

### B. FIELDS SEARCHED

Minimum documentation searched (classification system followed by classification symbols)

H04W 64/00(2009.01); H04W 56/00(2009.01); H04W 72/04(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 측정 갭(measurement gap), 위상(phase), 측정(measurement), TDW, PRS, 보고 (report)

### C. DOCUMENTS CONSIDERED TO BE RELEVANT

| Category* | Citation of document, with indication, where appropriate, of the relevant passages | Relevant to claim No. |
|---|---|---|
| Y<br>A | MODERATOR (CHINA TELECOM). [106bis-e-NR-R17-CovEnh-03] Summary of email discussion on joint channel estimation for PUSCH. R1-2110569, 3GPP TSG RAN WG1 Meeting #106bis-e. 23 October 2021.<br>See pages 7-9, 55, 66, 70, 89, 91, 148 and 153. | 1-7,9-15<br><br>8 |
| Y | 3GPP; TSGRAN; NR; Physical layer procedures for data (Release 17). 3GPP TS 38.214 V17.2.0. 23 June 2022.<br>See pages 57-63. | 1-7,9-15 |
| A | SPREADTRUM COMMUNICATIONS. Discussion on joint channel estimation for PUSCH. R1-2201555, 3GPP TSG RAN WG1 #108-e. 14 February 2022.<br>See pages 1-5. | 1-15 |
| A | NOKIA et al. Joint channel estimation for PUSCH coverage enhancements. R1-2201014, 3GPP TSG RAN WG1 #108-e. 14 February 2022.<br>See pages 1-22. | 1-15 |

☑ Further documents are listed in the continuation of Box C.　　☑ See patent family annex.

| | | |
|---|---|---|
| * | Special categories of cited documents: | |
| "A" | document defining the general state of the art which is not considered to be of particular relevance | |
| "D" | document cited by the applicant in the international application | |
| "E" | earlier application or patent but published on or after the international filing date | |
| "L" | document which may throw doubts on priority claim(s) or which is cited to establish the publication date of another citation or other special reason (as specified) | |
| "O" | document referring to an oral disclosure, use, exhibition or other means | |
| "P" | document published prior to the international filing date but later than the priority date claimed | |
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **14 November 2023** | **14 November 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT

| International application No. |
| --- |
| **PCT/KR2023/011328** |

**C.    DOCUMENTS CONSIDERED TO BE RELEVANT**

| Category* | Citation of document, with indication, where appropriate, of the relevant passages | Relevant to claim No. |
| --- | --- | --- |
| A | US 2022-0225322 A1 (LG ELECTRONICS INC.) 14 July 2022 (2022-07-14) See paragraphs [0241]-[0288] and figure 12. | 1-15 |

Form PCT/ISA/210 (second sheet) (July 2022)

**INTERNATIONAL SEARCH REPORT**
Information on patent family members

International application No.

**PCT/KR2023/011328**

| Patent document cited in search report | | | Publication date (day/month/year) | Patent family member(s) | | | Publication date (day/month/year) |
|---|---|---|---|---|---|---|---|
| US | 2022-0225322 | A1 | 14 July 2022 | CN | 115918177 | A | 04 April 2023 |
| | | | | CN | 115918177 | B | 08 September 2023 |
| | | | | EP | 4132125 | A1 | 08 February 2023 |
| | | | | JP | 2023-529749 | A | 11 July 2023 |
| | | | | KR | 10-2022-0148841 | A | 07 November 2022 |
| | | | | KR | 10-2555356 | B1 | 17 July 2023 |
| | | | | US | 11497006 | B2 | 08 November 2022 |
| | | | | US | 2023-0046073 | A1 | 16 February 2023 |
| | | | | WO | 2022-154583 | A1 | 21 July 2022 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **LEE, HONGKYU**. An Instantaneous Integer Ambiguity Resolution for GPS Real-Time Structure Monitoring. *Journal of Korean Society of Civil Engineers*, 2014, vol. 34 (1), 342-353